# FASCICULE DE BREVET EUROPEEN

(11) **EP 2 257 589 B1**
(45) Date de publication et mention de la délivrance du brevet: **17.10.2018**
(21) Numéro de dépôt: 09738298.0
(22) Date de dépôt: 27.03.2009
(51) Int. Cl.: C08J 7/16, B01J 31/02, C07C 279/12, C08G 83/00, C08G 63/06, C09C 1/28, C09C 3/10, C09C 3/12, C09J 11/00

(54) **MODIFICATION DE LA CHIMIE DE SURFACE D'ESPÈCES MACROMOLÉCULAIRES EN PRÉSENCE D'UNE GUANIDINE CONJUGUÉE**
ÄNDERUNG DER OBERFLÄCHENZUSAMMENSETZUNG EINER MAKROMOLEKULAREN SPEZIES UNTER VERWENDUNG EINES KONJUGIERTEN GUANIDINS
MODIFICATION OF THE SURFACE CHEMISTRY OF MACROMOLECULAR SPECIES IN THE PRESENCE OF A CONJUGATED GUANIDINE

(30) Priorité: 28.03.2008 FR 0852029
(43) Date de publication de la demande: 08.12.2010
(73) Titulaire: Polyrise, 33600 Pessac (FR)
(72) Inventeur: GAUD, Vincent, F-33607 Pessac Cedex (FR); ROUGE, Fabien, F-33607 Pessac Cedex (FR)
(74) Mandataire: Lavoix
(86) Numéro de dépôt international: PCT/FR2009/000351
(87) Numéro de publication internationale: WO 2009/133264

(56) Documents cités:
- WO-A-93/12157
- DE-A1- 10 143 566
- FR-A- 2 761 691
- US-A- 5 017 649
- US-A1- 2008 003 259
- US-B1- 6 887 517
- BARREIRA, SERGIO V. P. ET AL: "Surface modification chemistry based on the electrostatic adsorption of poly-L- arginine onto alkanethiol modified gold surfaces" LANGMUIR , 19(24), 10324-10331 CODEN: LANGD5; ISSN: 0743-7463, vol. 19, 2003, pages 10324-10331, XP002548777
- TOMALIA D A ET AL: "Structure control within poly(amidoamine) dendrimers: size, shape and regio-chemical mimicry of globular proteins" TETRAHEDRON, ELSEVIER SCIENCE PUBLISHERS, AMSTERDAM, NL, vol. 59, no. 22, 26 mai 2003 (2003-05-26), pages 3799-3813, XP004426751 ISSN: 0040-4020

## Description

La présente invention a trait à de nouvelles espèces macromoléculaires qui sont notamment adaptées à titre d'additifs dans des milieux complexes, aqueux ou non (tels que, par exemple, des encres, des peintures, des vernis, ou des compositions d'adhésifs), et dont la fonctionnalité de surface est variable en une large mesure en fonction de l'application recherchée.

Plus spécifiquement, l'invention concerne aussi une méthode de synthèse de telles espèces macromoléculaires.

Par "*espèces macromoléculaires*", on entend, au sens de la présente description, des composés minéraux, organiques ou hybrides minéraux et organiques qui sont dispersables au sein d'une composition liquide ou gélifiée sous la forme d'objets dispersés (particules ou agrégat de particules) ayant des dimensions d'au moins 5 nm, plus préférentiellement d'au moins 10 nm, et généralement inférieures à 1 mm, ces dimensions étant généralement supérieures à 15 nm, le plus souvent supérieures à 20 nm, par exemple entre 25 nm et 100 microns, et notamment entre 50 nm et 10 microns.

La notion d'espèces macromoléculaires, au sens de la présente invention, inclut aussi bien des polymères (en particulier des polymères à structure branchée) que des particules minérales (notamment des particules minérales de surface modifiée par des groupements organiques).

Dans les compositions de type encres, peintures, vernis ou adhésifs, il est bien connu d'incorporer des espèces macromoléculaires du type précité, à titre de charge ou d'additif, pour conférer auxdites compositions des propriétés rhéologiques spécifiques (pour réguler la viscosité par exemple) ou bien des fonctionnalités particulières (résistance mécanique de films obtenus à partir de la composition, coloration de la composition, vitesse de séchage, caractère adhésif de la composition et notamment affinité pour des substrats donnés, tels que le PMMA, le polycarbonate, l'acier, les métaux, ou le verre).

Un problème récurrent auquel on se retrouve confronté avec l'emploi d'additifs macromoléculaires du type précité est celui de la dispersion au sein des compositions complexes où ils sont introduits, qui s'avère souvent difficile à obtenir avec une réelle efficacité. Or, sans une dispersion efficace, l'additif n'est pas à même d'assurer sa fonction de façon optimale. Au contraire, une mauvaise dispersion peut même, dans certains cas, nuire aux propriétés de la composition.

Un autre inconvénient lié à l'emploi d'additifs macromoléculaires est celui de l'augmentation de la viscosité des compositions dans lesquels ces additifs sont employés. Les additifs macromoléculaires induisent en effet des viscosités qui peuvent être très élevées et qui nuisent par exemple à la manipulabilité des compositions, ce qui interdit leur utilisation dans certaines applications.

Un but de la présente invention est de fournir des espèces macromoléculaires à fonctionnalité adaptable, propres à une dispersion efficace au sein de compositions complexes telles que des encres, peintures, vernis, adhésifs, et dont l'incorporation au sein de telles composition n'induit, de préférence, pas une augmentation trop importante de la viscosité.

A cet effet, selon un premier aspect, la présente invention a pour objet un procédé de préparation d'espèces macromoléculaires de surface modifiée, comprenant une étape (e) dans laquelle des espèces macromoléculaires (M) ayant des dimensions d'au moins 5 nm et initialement porteuses de fonctions -OH et/ou - SH sont mises en contact avec :
- un catalyseur (C) porteur d'au moins une fonction guanidine conjuguée ; et
- des espèces réactives (E), comportant (entre autres groupements possibles) des groupements réactifs incluant :
   (i) au moins un groupe incluant un groupement carbonyle α-β insaturé C=C-C=O (par exemple un groupe acrylique, méthacrylique ou acrylamide) et/ou un groupement thiocarbonyle α-β insaturé C=C-C=S ; et/ou
   (ii) au moins un groupe hétérocyclique comprenant de 3 à 5 chaînons (de préférence 3 ou 4 chaînons), choisi parmi les éthers cycliques, les thioéthers cycliques et les cycles aziridiniques, ce groupe hétérocyclique étant de préférence au moins un groupe époxy, thioépoxy ou aziridine, et plus préférentiellement au moins un groupe époxy ou thioépoxy; et/ou
   (iii) au moins un groupe choisi parmi les groupes isocyanate -N=C=O ou thioisocyanate -N=C=S, et les groupements trivalents de formule >C=CZ-, où Z est un groupe électroattracteur (par exemple un groupe 4-nitrophényle, cyano ou -C=N-).

Dans l'étape (e) du procédé de l'invention, on modifie la surface des espèces macromoléculaires (M) initialement porteuses de fonctions -OH et/ou -SH par les espèces réactives (E), en présence du catalyseur (C) porteur d'au moins une fonction guanidine conjuguée.

Par "fonction guanidine conjuguée ", on entend, au sens de la présente description, une fonction guanidine porteuse d'une insaturation en alpha de l'azote de son groupe imine.

En d'autres termes, un catalyseur (C) porteur d'une fonction guanidine conjuguée est, au sens de la présente description, un composé porteur d'un fonction répondant à la formule schématique suivante :

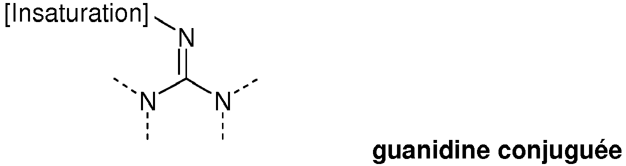

Dans une guanidine conjuguée selon l'invention, la présence de l'insaturation en alpha de l'azote du groupe imine confère notamment à la guanidine une basicité importante, avec un pKa bien supérieur au pKa d'une guanidine non conjuguée, le pKa d'une guanidine conjuguée étant généralement supérieur ou égal à 23 (typiquement de l'ordre de 25), contre un PKa de l'ordre de 12 pour une guanidine non conjuguée.

L'étape (e) du procédé de l'invention, mise en oeuvre en présence d'un catalyseur porteur d'au moins une fonction guanidine conjuguée du type précité conduit à une modification spécifique de la surface des espèces macromoléculaires (M). Schématiquement, il s'opère un greffage covalent des espèces réactives (E) sur les espèces macromoléculaires (M) par réaction des groupements réactifs portées par les espèces (E) avec les groupes -OH et/ou -SH initialement portées par les espèces macromoléculaires.

Dans le cadre de la présente invention, les travaux des inventeurs ont permis de mettre en évidence que les espèces macromoléculaires de surface modifiée obtenue selon l'étape (e) se révèlent particulièrement bien adaptées à une dispersion dans des compositions de type encres, peintures, vernis ou adhésifs et qui, en général, n'augmentent pas de façon trop drastique la viscosité des compositions dans lesquelles elles sont introduites.

En outre, un autre avantage du procédé de la présente invention est qu'il permet de moduler en une très large mesure la fonctionnalité de surface des espèces macromoléculaires modifiées issues de l'étape (e), ce qui peut être obtenu très simplement, en adaptant la nature des espèces réactives (E) employées. Le procédé de l'invention permet ainsi d'obtenir, à façon, des espèces macromoléculaires adaptées à des applications ciblées.

Sous réserve qu'il comprenne au moins une fonction guanidine conjuguée du type précité, le catalyseur (C) qui est employé dans l'étape (e) du procédé de l'invention peut varier en une très large mesure.

Selon un mode de mise en oeuvre intéressant de l'invention, le catalyseur (C) utilisé dans le procédé de l'invention comprend au moins une fonction bis-guanidine conjuguée.

Par "fonction bis-guanidine conjuguée", on entend, au sens de la présente description, une fonction incluant une structure conjuguée à 5 atomes d'azote répondant à la formule suivante:

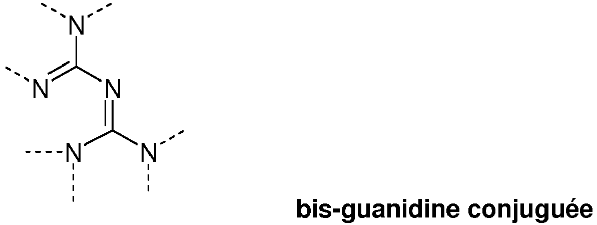

Selon un mode de réalisation particulier qui se révèle généralement bien adapté à la mise en oeuvre du procédé de l'invention, on utilise un catalyseur (C) porteur d'une fonction bis-guanidine conjuguée répondant à la formule (I) suivante : 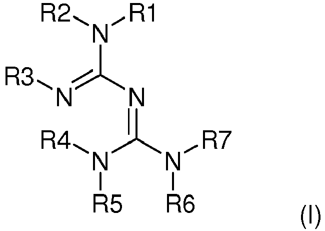 où chacun des groupements R1 à R7 représente, indépendamment des autres groupements :
- un atome d'hydrogène ; ou
- un groupe cyano -CN ; ou
- une chaîne hydrocarbonée, saturée ou insaturée, linéaire ou ramifiée, éventuellement cyclisée en tout ou partie, éventuellement substituée, et éventuellement interrompue par un ou plusieurs hétéroatomes (O, S, N, P, ou Si, par exemple) et/ou par des groupements porteurs d'héteroatomes tels que des carboxy, amide, ou carbamate (par exemple par des groupes divalents -C(=O)O-, -OC(=O)-, -O-C(=O)-O-, >N-C(=O)-, -C(=O)-N<, >N-C(=O)-O-, -O-C(=O)-N<, -C=N-, -N=C-, cette chaîne étant typiquement :
   - un groupe alkyle, alcényle ou alcynyle, linéaire ou ramifié, comprenant avantageusement de 1 à 12 atomes de carbone, par exemple de 1 à 6 atomes de carbone, ce groupe alkyle, alcényle ou alcynyle étant éventuellement substitué par exemple par un groupe alcoxy ;
   - un groupe cycloalkyle comprenant avantageusement de 6 à 18 atomes de carbone, éventuellement substitué par exemple par au moins un groupe alkyle ou alcoxy ;
   - un groupe aryle comprenant avantageusement de 6 à 18 atomes de carbone, éventuellement substitué, par exemple par au moins un groupe alkyle ou alcoxy ;
   - un hétérocycle, éventuellement aromatique, comprenant un ou plusieurs atomes choisis parmi S, O ou N ;
   - un groupe alkylaryle ou arylalkyle comprenant avantageusement de 8 à 18 atomes de carbone, où la partie aryle est éventuellement substituée, notamment par un groupe alkyle ou alcoxy ;
   - un groupe ester, amide, ou carbamate ; ou
   - une chaîne polymère, éventuellement porteuse d'autres groupements guanidine (de préférence de groupements guanidine conjuguée, le cas échéant).

Les catalyseurs répondant à la formule (I) peuvent être utilisés en tant que tels dans le procédé de l'invention, par exemple à l'état solubilisé ou dispersé dans un milieu solvant ou dispersant (de préférence non aqueux) ou en mélange avec les espèces macromoléculaires (M) et les espèces réactives (E) en l'absence de tout solvant ou dispersant. Alternativement, ils peuvent également être employés à l'état supporté.

De façon particulièrement avantageuse, on peut utiliser dans le procédé de l'invention un catalyseur (C) ayant la formule (I) précitée où chacun des groupements R1 à R7 représente, indépendamment des autres groupements, un atome d'hydrogène, un groupe alkyle comportant de 1 à 4 atomes de carbone, par exemple un groupe méthyle, éthyle, propyle, isopropyle ou t-butyle, ou un groupe cyano.

Se révèlent particulièrement intéressants les catalyseurs (C) ayant la formule (I) précitée où R1 et R3 sont des groupes alkyle comportant de 2 à 4 atomes de carbone (des groupes éthyle, propyle, isopropyle ou t-butyle, notamment) et où R2, R4, R5, R6 et R7 sont des atomes d'hydrogène ou bien des groupes alkyle comportant 1 ou 3 atomes de carbone (un groupe méthyle ou éthyle par exemple).

Selon un mode de réalisation spécifique, illustré dans les exemples donnés à la fin de la présente description, on peut par exemple utiliser un catalyseur (C) répondant répond à la formule (Ia) suivante :

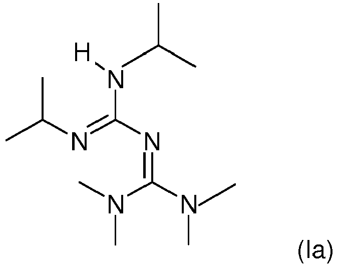

Un autre exemple de catalyseur (C) envisageable dans le cadre de la présente invention est la guanidine conjuguée de formule (Ib) ci-dessous :

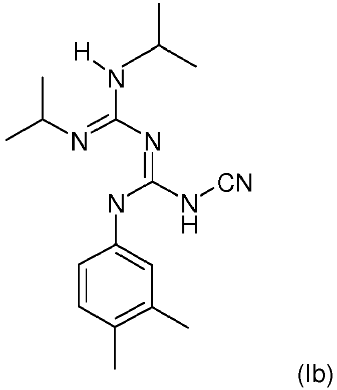

Selon un autre mode de réalisation possible, le catalyseur (C) employé dans l'étape (e) du procédé de l'invention est porteur de deux fonctions guanidines conjuguées entre elles.

Par "guanidines conjuguées entre elles ", on entend, au sens de la présente description, deux fonctions guanidines conjuguées du type défini plus haut, où les insaturations en alpha de chacun des groupes imine des deux guanidine sont reliées entre elles sous la forme d'une chaîne insaturée (éventuellement cyclisée en tout ou partie) permettant une conjugaison entre les deux guanidine.

Ainsi, un catalyseur (C) porteur de guanidines conjuguées entre elles est, au sens de la présente description, un composé porteur d'une fonction répondant à la formule schématique suivante :

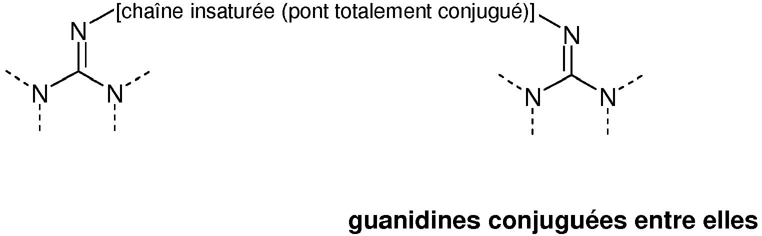

Dans les catalyseurs (C) comportant des guanidines conjuguées entre elles, la chaîne insaturée qui relie les deux guanidines et permet leur conjugaison (pont totalement conjugué) est par exemple :
- une chaîne hydrocarbonée insaturée à délocalisation pi totale, linéaire ou ramifiée, cyclisée en tout ou partie, par exemple un groupe alcénylaryle, arylalcényle, alcénylarylalcényle ou arylalcénylaryle, ces groupements comportant éventuellement des hétéroatomes tels que N et P et ces groupements étant éventuellement fonctionnalisés, notamment par un groupe guanidine pendant, ce groupement guanidine pendant étant alors avantageusement conjugué aux deux groupes guanidines liés par la chaîne carbonée ;
- un groupe aryle comportant de préférence de 6 à 18 atomes de carbone, éventuellement substitué notamment par un groupe guanidine, (avantageusement conjugué aux deux groupes guanidines liés par ledit groupe aryle) et/ou par un groupe alkyle ou alcoxy
- un groupe hétéroaryle comportant des hétéroatomes tels que O, N et S et avantageusement de 5 à 18 atomes de carbone

Dans le cadre de ce mode de réalisation, on peut par exemple employer comme catalyseur (C) le composé de formule (I') ci-dessous :

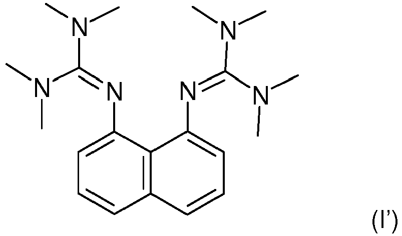

Selon encore un autre mode de réalisation possible, on peut utiliser un catalyseur (C) porteur de plusieurs fonctions guanidine conjuguées. Dans ce cas, ces fonctions guanidines conjuguées sont de préférence, mais non nécessairement, conjuguées entre elles. Dans le cadre de ce mode de réalisation, on peut notamment utiliser à titre de catalyseur (C) :
- un polymère comportant un enchaînement d'unités incluant des unités porteuses de fonctions guanidine conjuguées, de préférence ayant une masse moléculaire inférieure à 50 000g/mol, par exemple comprise entre 5 000 g/mol et 15 000 g/mol. Un mode de préparation de polymères de ce type est décrit dans Macromolecules, vol. 27, pp. 5520-5522. Comme polymère adapté, on peut également cité les polymères porteurs de fonctions guanidine conjuguées tels que les particules de polystyrène faiblement réticulé porteurs de fonctions bis-guanidine conjuguées décrites dans Reactive and Functional Polymers, vol. 48, pp. 65-74.
- des particules comportant sur leur surface des fonctions bis-guanidine conjuguées, ces particules étant le plus souvent à base d'oxyde minéral (silice et/ou alumine, notamment), et ayant typiquement de dimensions comprises entre 5 et 500 nm. De telles particules peuvent par exemple être obtenues par greffage de guanidine sur les particules d'oxyde minéral (par exemple selon le mode de réalisation décrit dans EP 168 167) puis réaction des particules greffées obtenues avec un carbodiimide, par exemple le N,N'-dicyclohexylcarbodiimide, de préférence dans un solvant aprotique comme le DMF par exemple.

Quelle que soit la nature exacte du catalyseur (C) employé dans l'étape (e), la nature des espèces macromoléculaires (M) mises en oeuvre dans le procédé de l'invention peut varier en une très large mesure.

Selon une première alternative de l'invention, les espèces macromoléculaires (M) traitées dans l'étape (e) comprennent (ou sont constitués par) des polymères à structure dendritique initialement porteurs de groupements -OH et/ou -SH.

Dans la présente description, lorsqu'il est fait référence à des espèces macromoléculaires traitées dans une étape et que ces espèces macromoléculaires sont dites « initialement porteuses de groupements -OH et/ou -SH », le terme « initialement » signifie que lesdites espèces macromoléculaires sont porteuses de groupes -OH et/ou -SH au début de l'étape de traitement, et que tout ou partie de ces groupements peuvent être consommés pendant cette étape (auquel cas les espèces macromoléculaires une fois modifiée peuvent *in fine* soit comprendre des groupes -OH et -SH résiduels, soit ne plus comprendre de tels groupes).

Par ailleurs, au sens où elle est employée ici, l'expression *"polymère à structure dendritique"* désigne tout polymère présentant une structure ramifiée, susceptible d'être obtenue par polymérisation (ou copolymérisation) d'unités monomères organiques de fonctionnalité supérieure à 2. Des exemples de tels polymères à structure dendritique sont les dendrimères, qui présentent une structure dendritique régulière et contrôlée, du type de ceux décrits notamment dans Progress in Polymer Science, vol. 25, pp. 453-571. D'autres polymères à structure dendritique moins régulière que celle des dendrimères peuvent être utilisés selon l'invention, par exemple les polymères dits "hyper-ramifiés" du type décrit par exemple dans le Journal of Polymer Science, Part A, vol. 36, pp. 1685-1698.

Les polymères de type hyper-ramifiés sont en général préférés aux dendrimères notamment dans la mesure où leur préparation est moins onéreuse.

Il est à noter ici que le catalyseur (C) qui est mis en oeuvre dans l'étape (e) du procédé de l'invention est un catalyseur qui est également adapté à la préparation de polymère hyper-ramifiés, à partir de monomères de fonctionnalité supérieure à deux et porteurs de fonctions -OH ou -SH et de fonctions réactives notamment du type des fonctions réactives portées par les espèces réactives (E) mise en oeuvre dans l'étape (e). Plus généralement, le catalyseur (C) s'avère également adapté pour catalyser la polymérisation de monomères de fonctionnalité supérieure à 2 porteurs de fonctions réactives telles que des fonctions ester (-C(=O)O-), thioester (-C(=S)O-), amide (-C(=O)N<), carbamate et thiocarbamates (-O-C=O-N<, -O-C=S-N<), ou bien encore phosphate (-O-P(=O)(-O-)₂) ou sulfate (-S(=O)₂-O-.

Ainsi, selon un mode de réalisation intéressant de l'invention, les espèces macromoléculaires (M) traitées dans l'étape (e) du procédé de l'invention peuvent être des polymères à structure dendritique obtenus par polymérisation de monomères de fonctionnalité supérieure à 2 en présence d'un catalyseur (C) tel que défini précédemment.

Dans ce cas de figure particulier, le procédé de l'invention comprend généralement les étapes (e1) et (e2) suivantes :
(e1) on forme un polymère (P) de structure dendritique par une polymérisation catalysée par le catalyseur (C) de monomères comportant :
   - au moins deux fonctions OH et/ou SH et au moins une fonction réactive ; et/ou
   - au moins deux fonctions réactives, et au moins une fonction OH et/ou SH ;
      où lesdites fonctions réactives portées par les monomères sont choisies parmi les groupes incluant un groupement carbonyle α-β insaturé C=C-C=O (par exemple les groupes acryliques, méthacryliques ou acrylamides)
      et/ou un groupement thiocarbonyle α-β insaturé C=C-C=S, les groupes éther cycliques comprenant de 3 à 5 chaînons, thioéther cycliques comprenant de 3 à 5 chaînons ou cycles aziridiniques comprenant de 3 à 5 chaînons; les groupes isocyanate -N=C=O, les groupe thioisocyanate-N=C=S, les groupements trivalents de formule >C=CZ- où Z est groupe électroattracteur notamment du type précité, et les fonctions esters, thioester, amide, carbamate, thiocarbamates, phosphate ou sulfate ;
   puis
(e2) on met en contact le polymère (P) de structure dendritique ainsi obtenu, qui est porteur de fonctions périphériques -OH ou -SH, avec des espèces réactives (E) telles que définies précédemment et le catalyseur (C).

Dans cette succession d'étapes, on prépare dans l'étape (e1) un coeur polymère en mettant en oeuvre le catalyseur (C), puis, dans l'étape (e2), on fonctionnalise ce coeur polymère en présence du même catalyseur (C). Généralement, c'est le même catalyseur (C) qui est utilisé dans les étapes (e1) et (e2).

Selon un mode de réalisation intéressant des étapes (e1) et (e2) précitées, les fonctions réactives portées par les monomères employés dans l'étape (e1) sont des groupes incluant un groupement carbonyle, notamment un groupe ester (avantageusement un groupe ester d'alkyle, notamment un groupe -COOCH₃ ou-COOC₂H₅).

Par ailleurs, les monomères mis en oeuvre dans l'étape (e1) sont avantageusement des composés porteurs (i) d'au moins une fonction réactive du type précité (par exemple, mais non nécessairement, un groupe incluant un groupement carbonyle) et (ii) d'au moins deux fonctions -OH et/ou -SH.

Plus avantageusement encore, les monomères de l'étape (e1) comprennent au moins un groupe incluant un groupement carbonyle (de préférence une fonction ester du type précité et au moins deux fonctions -OH).

Ainsi, à titre de monomère intéressant dans l'étape (e1), on peut notamment citer le composé répondant à la formule suivante :

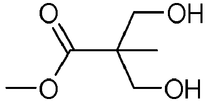

D'autres exemples indicatifs de monomères envisageables dans l'étape (e1) sont :
- le monomère de formule suivante : 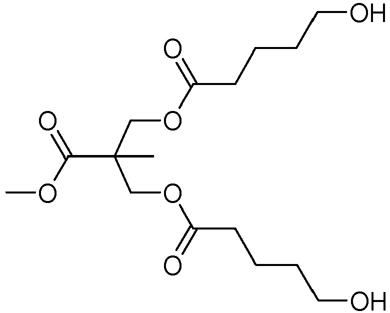 (qui peut notamment être obtenu à partir de l'acide 2,2-bis(hydroxyméthyl propionique) et de ε-caprolactone en présence d'octanoate d'étain, puis estérification du produit obtenu par du méthanol)
- le 3,5-dihydroxybenzoate de méthyle, de formule suivante:

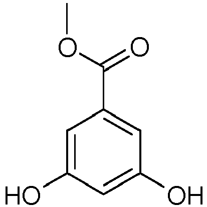

La polymérisation effectuée dans l'étape (e1) précitée procède avantageusement par voie anionique. Dans ce cas, l'étape (e1) est généralement conduite en présence d'une base forte à titre de co-catalyseur, cette base forte étant avantageusement choisie parmi les sels d'alcoolates comme tBuOK, ou bien encore EtONa.

Lorsqu'on met en oeuvre les étapes (e1) et (e2) ci-dessus, on obtient, à l'issue de l'étape (e1), un polymère P qui présente une structure dendritique, de type hyper-ramifiée, et qui est porteur de fonctions périphériques -OH et/ou -SH. Ce polymère P peut donc être traité selon le procédé de modification de l'invention, ce qui est fait dans l'étape (e2), où on met le polymère en contact avec des espèces réactives (E) en présence du catalyseur (C).

Dans le cadre de ce mode de réalisation de l'invention, compte tenu de l'emploi spécifique du catalyseur (C) dans l'étape (e1), l'étape (e2) peut être conduite très aisément, simplement en rajoutant les espèce (E) au milieu réactionnel obtenu à l'issue de l'étape (e1), éventuellement avec un rajout de catalyseur (C).

La mise en oeuvre des étapes (e1) et (e2) s'avère de ce fait particulièrement intéressante, dans la mesure où elle ne nécessite pas d'étapes de purification ou d'extraction entre la préparation du polymère dans l'étape (e1) et sa modification dans l'étape (e2). Cette possibilité de conduire les deux étapes selon une voie de type *"one pot"* se traduit notamment en termes de réduction des coûts du procédé et de gain de temps.

Selon une deuxième alternative de l'invention, les espèces macromoléculaires (M) traitées dans l'étape (e) comprennent (ou sont constituées par) des particules minérales présentant en surface des groupements -OH ou -SH.

Selon cette alternative, les particules sont en général à base d'un oxyde minéral (on entend par là que les particules sont constituées en tout ou partie par au moins un oxyde minéral, de préférence accessible au moins en partie en surface de la particule). Les particules employées sont par exemple à base de silice, d'alumine, ou bien encore d'oxyde de zirconium ou d'oxyde de titane. Le ou les oxydes constitutifs des particules peuvent éventuellement être des oxydes dopés ou des oxydes sous forme de solutions solides (silice ou oxyde de zirconium dopés par de l'europium ou de l'yttrium, par exemple). Selon un mode de réalisation spécifique, on peut employer des particules de silice, par exemple sous la forme d'un sol non aqueux (par exemple un sol alcoolique).

Plus généralement, toute particule minérale peut être employée dans le cadre de la première variante sous réserve qu'elles présentent en surface des groupements -OH ou -SH libres capables de réagir avec les espèces réactives (E) dans l'étape (e) du procédé. Des groupements -OH peuvent être des groupes naturellement présents sur les particules utilisées (c'est la cas par exemple pour des particules de silice ou d'oxydes métalliques comme l'alumine). Néanmoins, plus généralement, les particules employées sont greffées par des groupes -OH ou -SH, ou par des chaînes organiques porteuses de groupements -OH ou -SH libres préalablement à l'étape (e). L'introduction (greffage) de ces groupements - OH ou -SH à la surface des particules d'oxydes métalliques peut être effectuée selon des méthodes connues de l'homme du métier. Par exemple, au départ de particules minérales porteuses de groupements de surface de type Si-OH, Al-OH, on peut effectuer des réactions d'hydrolyse-condensation à partir d'alkoxysilanes porteurs de groupes -OH ou -SH contenant au moins une chaîne hydrocarbonée liée par un atome de carbone à l'atome de silicium.

Les particules minérales employées peuvent être aussi bien isotropes (sphériques par exemple) qu'anisotropes (en forme de bâtonnets ou de plaquettes, notamment)

Par ailleurs, lorsqu'on emploie des particules minérales à titre d'espèces macromoléculaires (M) dans l'étape (e) du procédé de l'invention, on préfère en général les employer sous forme dispersée au sein d'un milieu dispersant de préférence anhydre (alcool ou autre solvant organique), où les particules sont sous la forme d'objets dispersés (particules isolées et/ou agrégats de particules) ayant une taille de préférence comprises entre 5 nm et 100 microns, ces dimensions étant généralement supérieures à 10 nm, le plus souvent supérieures à 20 nm, par exemple entre 25 nm et 50 microns, notamment entre 30 nm et 10 microns.

Plus généralement, on peut utiliser dans l'étape (e) d'autres espèces macromoléculaires (M) que les polymères de structure dendritique et les particules minérales précitées. Par exemple, on peut employer à titre d'espèces macromoléculaires (M) des particules organiques, comme par exemple des microbilles de polymères (par exemple des microbilles de polyuréthane fonctionnalisées en surface par des groupes -OH libres) ou bien encore des espèces minérales à l'état gélifié (gel de silice par exemple). Le procédé de l'invention peut par exemple être mis à profit pour modifier les propriétés d'un film déposé sur une surface (film d'encre, de vernis, de peinture ou d'adhésif par exemple) au cours de son durcissement.

Indépendamment de leur nature exacte, les espèces macromoléculaires (M) employées dans l'étape (e) sont de préférence porteuses de groupements hydroxyles -OH. Dans ce cadre, les espèces macromoléculaires (M) peuvent être porteuses d'un mélange d'espèces -OH et d'espèces -SH, ou bien uniquement de fonction -OH.

De façon générale, quelle que soit la nature exacte des espèces macromoléculaires (M), des espèces réactives (E) et du catalyseur (C) qui sont employés dans le procédé de l'invention, on préfère le plus souvent que, dans l'étape (e) de mise en contact des espèces macromoléculaires (M), des espèces réactives (E) et du catalyseur (C), le ratio molaire (catalyseur/groupements réactifs), de la quantité de catalyseur (C) rapportée à la quantité totale des groupements réactifs présents sur les espèces réactives (E) soit compris entre 0,05% et 10%, plus avantageusement entre 0,2% et 5% et plus avantageusement encore entre 0,5% et 2,5%.

Le ratio molaire (groupements réactifs/groupes -OH ou -SH) de la quantité totale des groupements réactifs présents sur les espèces réactives (E) rapportée à la quantité totale de groupements -OH et -SH présents sur espèces macromoléculaires (M) est quant à lui à adapter dans l'étape (e), en fonction de la quantité de fonctions modifiées qu'on souhaite introduire sur la surface des espèces macromoléculaires (M). Dans le cas le plus général, selon qu'on cherche un greffage quantitatif ou partiel, ce ratio molaire (groupements réactifs/groupes - OH ou -SH) varie le plus souvent dans la gamme allant de 5 % à 150%.

Lorsque les espèces (E) sont monofonctionnelles (à savoir porteuses d'un seul groupement réactif par molécule), le ratio molaire (groupements réactifs/groupes -OH ou -SH) est plus préférentiellement compris entre 20% et 110%, par exemple entre 25% et 100%.

Dans le cas plus spécifique où on emploie des espèces réactives (E) multifonctionnelles (à savoir porteuses de deux groupements réactifs ou plus par molécule) l'étape (e) est susceptible de conduire à une réticulation des espèces (M) entre elles. Pour éviter les réactions de couplage à l'origine de cette réticulation, il est souvent préférable de conduire l'étape (e) avec un ratio molaire (groupements réactifs/groupes -OH ou -SH) supérieur ou égal à 75%, avantageusement supérieur ou égal à 90%, par exemple compris entre 100 et 150%. Si, au contraire, on cherche à favoriser le couplage entre les espèces (M), le ratio molaire (groupements réactifs/groupes -OH ou -SH) employé dans l'étape (e) sera de préférence choisi inférieur à 50%, et de préférence inférieur à 30%, par exemple entre 5 et 25%.

Dans certains cas, il peut être intéressant de conduire l'étape (e) de mise en contact des espèces macromoléculaires (M), des espèces réactives (E) et du catalyseur (C) en présence d'un co-catalyseur choisi avantageusement parmi les bases fortes telles que, par exemple, les sels d'alcoolates comme tBuOK ou EtONa. La mise en oeuvre d'un tel co-catalyseur, si elle se révèle intéressante dans certains cas, n'est pas systématiquement requise dans le cadre de l'étape (e). Ainsi, l'étape (e) peut tout à fait être conduite sans employer d'autre espèce catalytique que le catalyseur (C).

Il peut par ailleurs se révéler intéressant de conduire l'étape (e) en présence d'un agent stabilisant, tel que le 3,5-di-ter-butyl-4-hydroxytoluène (BHT), la méthyléther-hydroquinone (MEHQ) ou l'hydroquinone, qui permettent notamment d'inhiber une réaction de polymérisation radicalaire spontanée des espèces réactives (E), qui pourrait sinon avoir lieu (notamment lorsque l'étape (e) est conduite à une température supérieure à 90°C).

Par ailleurs, dans l'étape (e), la mise en contact des espèces macromoléculaires (M), des espèces réactives (E) et du catalyseur (C) peut avoir lieu en mettant ces différents composés dans un milieu solvant et/ou dispersant. Dans ce cas de figure, le milieu solvant et/ou dispersant employé est de
préférence un milieu exempt d'eau (et qui, avantageusement, ne comprend pas non plus de solvant protique ou hydroxylé) notamment pour ne pas interagir sur les réactions qui ont lieu dans l'étape (e). Des milieux solvants et/ou dispersants adaptés dans l'étape (e) incluent notamment le THF (tétrahydrofuranne), l'acétate d'éthyle, le DMSO (diméthylsulfoxyde), le toluène, le xylène, et leurs mélanges. Certains solvants sont généralement à proscrire dans le cadre de la mise en oeuvre de l'étape (e) : c'est notamment le cas du DMF qui se révèle en général très mal adapté selon l'invention.

Alternativement, selon un mode de réalisation qui s'avère souvent intéressant, dans l'étape (e), la mise en contact des espèces macromoléculaires (M), des espèces réactives (E) et du catalyseur (C) peut être conduite sans ajouter ni solvant ni dispersant aux composés (M), (E) et (C). Ce mode de réalisation spécifique est envisageable sous réserve que le catalyseur (C) se retrouve solubilisé ou dispersé de façon efficace dans le mélange des composés (M), (E) et (C). A cet effet, on préfère employer des espèces (E) qui sont à même de jouer le rôle de solvant et/ou dispersant (dans ce cadre on peut notamment utiliser comme espèces (E) des polymères de masse molaire inférieure à 10 000 g/mol).

D'autre part, de façon très générale, dans l'étape (e), la mise en contact des espèces macromoléculaires (M), des espèces réactives (E) et du catalyseur (C) est le plus souvent conduite à une température comprise entre 80°C et 160°C, plus préférentiellement entre 90°C et 140°C.

En fonction de la nature des groupements espèces réactives (E) mises en oeuvre dans l'étape (e), on peut distinguer différentes grandes variantes du procédé de l'invention, à savoir :

### • Variante 1 :

### Les espèces réactives (E) comprennent spécifiquement des groupements carbonyle α-β insaturé C=C-C=O et/ou thiocarbonyle α-β insaturé C=C-C=S

Selon cette première variante du procédé de l'invention, qui permet de moduler en une large gamme la fonctionnalisation de surface des espèces (M), les espèces réactives (E) qui sont mises en oeuvre dans l'étape (e) sont des composés qui comportent de préférence des groupements carbonyle α-β insaturé C=C-C=O et/ou au moins un groupement carbonyle α-β insaturé C=C-C=O.

De préférence, dans le cadre de cette première variante, les espèces réactives (E) sont des composés comportant au moins un groupement acrylate ou méthacrylate.

Selon un mode de réalisation particulièrement avantageux de la première variante, les espèces réactives (E) sont des composés répondant à la formule (II) suivante : 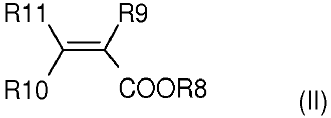 où :
- le groupe R8 est un groupe alkyle, linéaire ou ramifié, ou une chaîne hydrocarbonée, saturée ou insaturée, linéaire ou ramifiée, éventuellement cyclisée en tout ou partie, éventuellement substituée, et éventuellement interrompue par un ou plusieurs hétéroatomes choisis parmi N, O, S, P et Si (par exemple un groupe alcényle, cycloalkyle, aryle, alkylaryle ou arylalkyle), R8 étant de préférence un groupe alkyle ; et
- les groupes R9, R10 et R11 représentent chacun, indépendamment, un atome d'hydrogène, un groupe alkyle linéaire ou ramifié, ou une chaîne hydrocarbonée, saturée ou insaturée, linéaire ou ramifiée, éventuellement cyclisée en tout ou partie, éventuellement substituée, et éventuellement interrompue par un ou plusieurs hétéroatomes choisis parmi N, O, S, P et Si.

Avantageusement, dans les composés répondant à la formule (II) précitée, le groupe R8 est un groupe méthyle ou éthyle.

Se révèlent notamment particulièrement bien adaptés à titre d'espèces réactives (E) selon la première variante de l'invention les composés répondant à la formule (II) précitée, et dans lesquels :
- le groupe R8 est un groupe alkyle comprenant de 1 à 12 atomes de carbone, de préférence moins de 6 atomes de carbone (par exemple un groupe méthyle ou éthyle) ;
- le groupe R9 est un atome d'hydrogène ou un groupe méthyle ; et
- chacun des groupes R10 et R11 est, indépendamment, un atome d'hydrogène ou un groupe alkyle, alcényle, cycloalkyle, aryle, alkylaryle ou arylalkyle, comprenant de préférence de 1 à 18 atomes de carbone, par exemple de 2 à 8 atomes de carbone.

Les travaux des inventeurs ont mis en évidence dans le cadre de la présente invention que, dans les conditions de réalisation de la première variante du procédé de l'invention, on obtient une fonctionnalisation intéressante de la surface des espèces macromoléculaires (M), qui peut, au choix, être employée :
- soit simplement pour fonctionnaliser tout ou partie de la surface des espèces macromoléculaires (M),
- soit, si désiré, pour fonctionnaliser tout ou partie de la surface des espèces (M), tout en obtenant en outre un couplage des espèces (M) entre elles par des réactions de couplage.

Plus précisément, il s'avère que la mise en oeuvre d'espèces réactives (E) comportant spécifiquement des groupements incluant un carbonyle α-β insaturé C=C-C=O (groupements de type acrylate ou méthacrylate), conduit à deux réactions possibles avec les groupements -OH et/ou -SH présents sur les espèces (M), à savoir :
- une réaction d'addition de type addition de Michaël ; et/ou
- une réaction de transestérification.

Typiquement, lorsque les espèces (M) sont porteuses de groupes -OH, et qu'on emploie des espèces réactives (E) répondant à a formule (II) précitées, la réaction entre espèces macromoléculaires (M) et ces espèces réactives (E) et le catalyseur C conduisent à la conversion d'au moins certains des groupes -OH des espèces M en des fonctions de formule -O-CR10R11-CR9-COOR8 (par addition de Michaël) et/ou en des fonctions de formule -O-(C=O)-CR9=CR10R11 (par transestérification, avec formation conjointe d'un alcool R8-OH).

De même, lorsque les espèces (M) sont porteuses de groupes -SH, et qu'on emploie des espèces réactives (E) répondant à a formule (II) précitées, la réaction entre espèces macromoléculaires (M) et ces espèces réactives (E) et le catalyseur C conduisent à la conversion d'au moins certains des groupes -SH des espèces M en des fonctions de formule -S-CR10R11-CR9-COOR8 (addition de Michael) et/ou en des fonctions de formule -S-(C=O)-CR9=CR10R11 (par transestérification, avec formation conjointe d'un thiol R8-SH).

Des phénomènes similaires à ceux décrits ci-dessus pour les espèces réactives (E) porteuses de groupement carbonyle α-β insaturé sont observés lorsque les espèces réactives (E) comprennent des groupements thiocarbonyle α-β insaturé C=C-C=S.

Les inventeurs ont maintenant mis en évidence que, dans les conditions de l'invention, l'étape (e) telle que conduite dans le cadre de la première variante conduit le plus souvent systématiquement à des réactions de type addition de Michaël, et que les réactions de transestérification peuvent quant à elles être évitées ou au contraire favorisées en jouant sur les paramètres réactionnels de l'étape (e), comme cela est explicité ci-après.

Les inventeurs ont en outre mis en évidence que, dans le cas où des réactions de transestérification ont lieu, celles-ci conduisent le plus souvent à des phénomènes de couplage entre les espèces (M) en plus de la fonctionnalisation de surface. Cet effet de couplage semble s'expliquer au moins en partie par le fait que les fonctions formées par réaction de transestérification sur les espèces (M) sont des fonctions capables de réagir selon une réaction d'addition de Michaël avec groupes -OH et/ou -SH présent dans le milieu. Dans le cas particulier de l'utilisation d'espèces réactives (E) ayant la formule (II) précitée, ces fonctions formées par réaction de transestérification sont des fonctions -O-(C=O)-CR9=CR10R11 ou -S-(C=O)-CR9=CR10R11. Une fonction de ce type portée par une première espèce (M) peut réagir avec un groupe -OH et/ou -SH portée par une autre espèce (M), pour former une liaison covalente entre ces deux espèces, qui se retrouvent donc couplées (par des groupements divalents pontants de formule -O-CR10R11-CR9-C(=O)-O- ; -O-CR10R11-CR9-C(=O)-S- ;-S-CR10R11-CR9-C(=O)-O- ; et/ou -S-CR10R11-CR9-C(=O)-S-).

Cet effet de pontage entre les espèces (M) peut notamment être mis à profit pour augmenter la masse moléculaire des espèces obtenues. Les modes de réalisation de l'invention conduisant à un tel effet de pontage se révèlent notamment adaptés pour la préparation de polymères à structure dendritiques de haute masse moléculaire.

A l'inverse, si, dans le procédé de l'invention, on se place dans des conditions où les réactions de transestérification sont défavorisées, on obtient essentiellement (voire exclusivement dans certains cas) une fonctionnalisation de tout ou partie de la surface des espèces (M) par des fonctions formées par addition de Michaël (des fonctions -O-CR10R11-CR9-COOR8 ou -S-CR10R11-CR9-COOR8, dans le cas particulier de l'utilisation d'espèces réactives (E) de formule (II)), et ce essentiellement sans phénomène de couplage entre les espèces (M).

Pour favoriser l'obtention de couplages entre les espèces (M) dans le cadre de la première variante du procédé de l'invention, on peut notamment mettre en oeuvre au moins une des deux conditions ci-après (et de préférence les deux conjointement) :
- conduire l'étape (e) sous une pression de 0,7 à 1 bar (c'est-à-dire de 7.10⁴ à 10⁵ Pa).
   Une pression comprise dans cette gamme s'avère suffisamment faible pour assurer une fonctionnalisation initiale des espèces (M) par transestérification, qui est un préalable nécessaire à la réaction de couplage. Cependant, elle est dans le même temps suffisamment élevée pour défavoriser la réaction de transestérification au profit de la réaction d'addition de Michaël ce qui est la deuxième condition importante pour que le couplage ait effectivement lieu. En effet, la faible pression mise en oeuvre facilite l'extraction en continu les alcools et/ou thiols formés par la réaction de transestérification. L'équilibre de la réaction de transestérification s'en trouve donc déplacé et la réaction de transestérification est alors favorisée (cet effet est tout particulièrement net lors de l'emploi de composés (II) où R8 est un éthyle ou un méthyle, l'alcool formé étant alors le méthanol ou l'éthanol, très aisément extractible sous pression réduite).
   A noter que, de façon plus générale, un couplage peut être obtenu, dans certains cas, à des pressions autour de la pression atmosphérique, typiquement entre 0,7 et 2 bar ; toutefois, un tel couplage ne s'opère pas systématiquement lorsque l'étape (e) est conduite entre 1 et 2 bar.
- conduire l'étape (e) avec un ratio molaire espèces (E)/espèces (M) d'au plus 75%
   Par "ratio molaire espèces (E)/espèces (M)", on entend le rapport molaire de la quantité de groupements réactifs présents sur les espèces (E) rapporté à la quantité de groupes -OH et/ou -SH portés par les espèces (M). Pour favoriser au mieux le couplage, ce ratio molaire est préférentiellement inférieur ou égal à 50%, plus avantageusement inférieur ou égal à 40%, par exemple compris entre 10 et 30%.
   A noter qu'un couplage peut être obtenu pour des ratio molaire espèces (E)/espèces (M) allant jusqu'à 100%, mais qu'un couplage n'est toutefois pas systématique lorsque le ratio est entre 75 et 100%.

Par ailleurs, lorsqu'on souhaite obtenir un couplage entre les espèces (M) dans le cadre de la première variante du procédé de l'invention, il s'avère le plus souvent préférable de conduire l'étape (e) à une température comprise entre 70°C et 180°C, plus préférentiellement entre 90°C et 140°C, par exemple entre 95°C et 135°C.

A l'inverse, lorsqu'on souhaite éviter les phénomènes de couplage entre les espèces (M) dans le cadre de la première variante du procédé de l'invention, il est indiqué de mettre en oeuvre au moins une des deux conditions ci-après (et de préférence les deux), qui ont pour effet d'inhiber la réaction de transestérification :
- conduire l'étape (e) sous une pression supérieure à 2 bar (c'est-à-dire supérieure à 2.10⁵ Pa), de préférence entre 2 et 10 bar (soit entre 2.10⁵ Pa et 10⁶ Pa),
   A une telle pression l'extraction des alcools et/ou thiols formés par la réaction de transestérification est défavorisée, ce qui inhibe la réaction de transestérification. Avantageusement, pour obtenir cet effet, on peut typiquement travailler entre 2 et 5 bar. (L'inhibition de la réaction de transestérification est d'autant plus marquée que la pression est élevée, en particulier au dessus de 2,5 bar et plus encore au-delà de 3 bar, toutefois, notamment pour des raisons de coût de procédé, il est souvent préférable de conduire le procédé à une pression relativement modérée et des pressions supérieures à 5 bars ne s'avèrent généralement pas requises).
   A noter que des réactions de modification sans couplage peuvent être observées à des pressions inférieures à 2 bars (par exemple sous légère surpression, notamment à des pressions supérieures à 1,1 bar). L'inhibition du couplage n'est toutefois pas systématique à des pressions inférieures à 2 bars.
- conduire l'étape (e) avec un ratio molaire espèces (E)/espèces (M) d'au moins 100%
   Pour inhiber au mieux les réactions de couplage, il est avantageux que ce ratio molaire (rapport molaire de la quantité de groupements réactifs présents sur les espèces (E) rapporté à la quantité de groupes -OH et/ou -SH portés par les espèces (M)) soit compris entre 100% et 125% lorsque les espèces (M) sont monofonctionnelles (à savoir porteuses d'un seul groupe réactif -OH ou SH) et supérieur à 150% (par exemple entre 150% et 250% lorsque les espèces (M) sont polyfonctionnelles (à savoir porteuses d'au moins deux groupes réactifs -OH et/ou SH).
   A noter que des réactions de modification sans couplage peuvent être obtenues dans certains cas pour des ratios molaire espèces (E)/espèces (M) inférieurs à 100%, notamment entre 75% et 100%. Néanmoins, dans cette gamme, l'inhibition des réactions de couplage n'est pas systématiquement assurée.

D'autre part, lorsqu'on souhaite inhiber les réactions de couplage entre les espèces (M) dans le cadre de la première variante du procédé de l'invention, il s'avère le plus souvent préférable de conduire l'étape (e) à une température supérieure à 100°C, plus préférentiellement supérieure à 120°C, avantageusement supérieure à 140°C (cette température restant néanmoins le plus souvent inférieure à 250°C, préférentiellement inférieure à 200°C, voire à 180°C, ce qui permet notamment de limiter les coûts de procédé et de ne pas affecter la stabilité des composés organiques mis en oeuvre.

Il est par ailleurs à noter que la mise en oeuvre de la première variante du procédé de l'invention permet également, dans certains cas, d'obtenir la formation de chaînes polymères (polyacrylates ou polyméthacrylate notamment) sur la surface des espèces macromoléculaires (M). A cet effet, on peut par exemple réaliser la mise en contact des espèces macromoléculaires (M), des espèces réactives (E) et du catalyseur (C) en présence d'un co-catalyseur de polymérisation anionique, choisi avantageusement parmi les bases fortes telles que les sels d'alcoolates (comme tBuOK, notamment). Lorsqu'on travaille avec la présence d'un tel co-catalyseur additionnel, on obtient le plus souvent une réaction de polymérisation anionique des espèces E avec les groupes -O-(C=O)-CR9=CR10R11 et/ou -S-(C=O)-CR9=CR10R11 formés sur certaines des espèces macromoléculaires M, ce qui conduit à la formation de chaînes poly(méth)acrylates terminales sur les espèces (M) à l'issue de l'étape (e). Cet effet peut être mis à profit notamment pour la formation de brins linéaires à la périphérie de polymères à structure dendritiques ou bien pour la formation de chaînes polymères sur des particules inorganiques. Dans les cas où on emploie un co-catalyseur de polymérisation anionique additionnel dans l'étape (e) pour atteindre le résultat précité, on préfère en général que le ratio molaire (co-catalyseur/fonctions bis-guanidine) au sein du milieu réactionnel de l'étape (e) soit compris entre 10% et 100%, et plus préférentiellement entre 20% et 50%.

Selon un mode de réalisation spécifique, la première variante du procédé de l'invention peut être mise à profit pour synthétiser des polymères à structure dendritiques par polymérisation de monomères de fonctionnalité supérieure à 2 selon les étapes (e1) et (e2) précitées. Dans ce cas de figure, de façon avantageuse, les étapes (e1) et (e2) du procédé de l'invention peuvent alors être conduites dans les conditions suivantes :
(e1) on forme un polymère (P) de structure dendritique par polymérisation de monomères comportant :
   - au moins une fonction ester, acrylate ou méthacrylate ; et au moins deux fonctions OH ou SH ; et/ou
   - au moins deux fonctions choisies parmi les fonctions ester, acrylate ou méthacrylate, et au moins une fonction OH ou SH ; puis
(e2) on met en contact le polymère (P) de structure dendritique ainsi obtenu (qui est porteur de fonctions périphériques -OH ou -SH) avec des espèces réactives E et le catalyseur C.

Selon ce mode de réalisation spécifique, les étapes (e1) et (e2) sont avantageusement conduites en présence d'un co-catalyseur de polymérisation anionique de type sel d'alcoolates du type précité.

### • Variante 2 :

### Les espèces réactives (E) comprennent spécifiquement des groupements hétérocycliques ayant de 3 à 5 chaînons, choisis parmi les éthers cycliques, les thioéthers cycliques et les cycles aziridiniques.

Selon cette deuxième variante du procédé de l'invention, les espèces réactives (E) qui sont mises en oeuvre dans l'étape (e) sont des composés qui comportent spécifiquement, par exemple à titre de groupe terminal :
- au moins un groupement éther cyclique comprenant de 3 à 5 chaînons, à savoir un groupe de formule schématique suivante 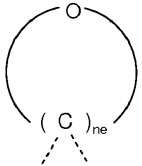 où ne est un nombre entier allant de 3 à 5, de préférence égal à 3 ou 4 ; et/ou
- au moins un thioéther cyclique comprenant de 3 à 5 chaînons , à savoir un groupe de formule schématique suivante 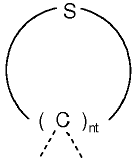 où nt est un nombre entier allant de 3 à 5, de préférence égal à 3 ou 4 ; et/ou
- au moins un cycle aziridinique comprenant de 3 à 5 chaînons (de préférence 3 ou 4) à savoir un groupe de formule schématique suivante 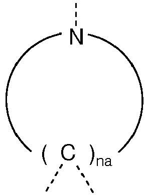
où na est un nombre entier allant de 3 à 5, de préférence égal à 3 ou 4.

Selon un mode de réalisation préférentiel de cette variante, les espèces réactives (E) sont des composés comportant un groupe époxy et/ou thioépoxy, respectivement de formules schématiques :

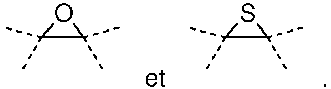

Alternativement, les espèces réactives (E) peuvent être des composés comportant un groupe aziridine ayant la formule schématique suivante :

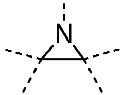

Dans ce cas de figure, ces groupes présents sur les espèces (E) réagissent avec les groupements -OH et/ou -SH présents sur les espèces M pour conduire à la formation, sur les espèces M, de fonctions ayant les formules schématiques suivantes :

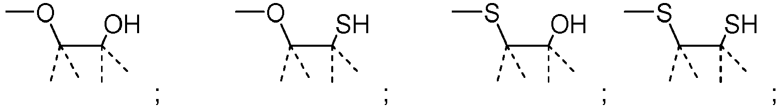

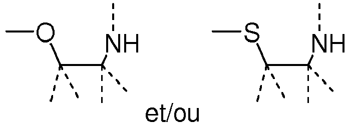

Dans le cadre de la présente invention, les travaux des inventeurs ont permis d'établir que, l'emploi spécifique du catalyseur (C), permet d'obtenir une réaction d'ouverture contrôlée des cycles tendus de type époxyde et thioépoxyde.

Plus précisément, il s'avère que, de façon surprenante, les catalyseurs comprenant des fonctions bis-guanidine s'avèrent des agents de protonation très efficaces, assurant une catalyse efficace de la réaction d'ouverture de cycles tendus de type époxydes, mais qu'ils n'assurent cependant pas le rôle d'amorceurs de polymérisation anionique de composés de type époxyde ou thioépoxyde.

De ce fait, la deuxième variante du procédé de l'invention se révèle particulièrement intéressante pour fonctionnaliser la surface d'espèces moléculaires par des fonctions de type 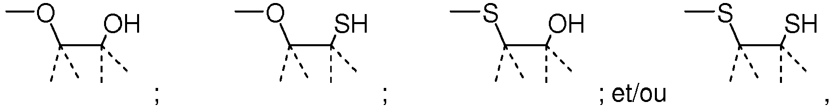 et ce sans risque de formation de chaînes polymères de type polyéther ou polythioéther à la surface des espèces (M). On obtient ainsi une fonctionnalisation parfaitement contrôlée des espèces (M).

### • Variante 3 :

### Les espèces réactives (E) comprennent des groupes isocyanate -N=C=O, et/ou thioisocyanate -N=C=S, et/ou des groupes trivalents de formule >C=CZ- où Z est groupe électroattracteur.

Dans ce cas de figure, le catalyseur (C) de l'invention s'avère constituer un catalyseur particulièrement efficace de la réaction de transformation de la chimie de surface des espèces (M) opérée dans l'étape (e).

Dans le cadre de cette variante, les groupes trivalents de formule >C=CZ-que peuvent porter les espèces réactives (E) employées peut varier en une très large mesure, sous réserve que la double liaison C=C soit appauvrie en électron (par effet mésomère et/ou inductif) par le groupe électroattracteur Z en alpha de cette liaison.

Un "groupe électroattracteur" au sens de la présente description a de préférence une constante de Hammet (σₚ) supérieure ou égale à la valeur de 0,05 (qui correspond notamment à la valeur de σₚ du groupe phényle) dans l'échelle des constantes de Hammet où le σₚ de l'hydrogène est nul et où le σₚ d'un groupe trifluorométhyle vaut 0,53. A titre de groupe électroattracteur Z intéressant selon l'invention, on peut notamment citer les groupes phényle substitués par exemple le 4-nitrophényle), ou bien encore -CN, -C(=O)-, -C(=N-)-, C(=O)-S-, ou un groupe thiophène.

### • Variante 4 :

### Les espèces réactives (E) comprennent des composés difonctionnels

Selon cette quatrième variante du procédé de l'invention, compatible avec l'une des précédente, les espèces réactives (E) comprennent des composés difonctionnels comportant au moins deux groupements réactifs choisis parmi les groupes incluant au moins un groupement carbonyle α-β insaturé C=C-C=O et/ou thiocarbonyle α-β insaturé C=C-C=S, les groupes hétérocycliques comprenant de 3 à 5 chaînons (éthers cycliques, thioéthers cycliques ou cycles aziridiniques du type précité), les groupes isocyanates, les groupes thioisocyanate -N=C=S, et les groupes de formule >C=CZ- où Z est groupe électroattracteur tels que définis plus haut dans la présente description.

En mettant en oeuvre cette variante du procédé, on obtient un pontage des espèces M suite à la mise en contact des espèces macromoléculaires (M), des espèces réactives (E) et du catalyseur (C). En effet, les deux groupements présents sur les espèces réactives (E) ont tendance à réagir avec deux groupements -OH et/ou -SH présents sur des espèces macromoléculaires distinctes.

Cette variante permet en particulier d'accéder à des polymères ramifiés de masse moléculaire élevée. Dans ce cadre, on peut typiquement utiliser à titre d'espèces (M) des polymères de faible masse moléculaire (par exemple comprise entre 6 000 et 8000 g/mol), l'étape (e) conduisant à un couplage de ces polymères entre eux, ce par quoi on obtient des polymères de masse moléculaire plus élevée (typiquement ayant une masse moléculaire d'au moins 12 000 g/mol , par exemple supérieure ou égale à 15 000 g/mol). Il est à noter que les polymères de masse élevée ainsi obtenus conservent généralement une viscosité faible.

Dans le cadre de la quatrième variante du procédé de l'invention, on utilise avantageusement des espèces réactives (E) qui comprennent (ou qui sont constituées par) un ou plusieurs composés répondant à la formule générale (III) suivante :

R12-(L)-R13 formule (III)

où :
les groupements R12 et R13, identiques ou différents, représentent, indépendamment :
   - un groupe incluant un groupement carbonyle α-β insaturé C=C-C=O, de préférence un groupe acrylate ou méthacrylate ; ou
   - un groupe éther cyclique comprenant de 3 à 5 chaînons, thioéther cyclique comprenant de 3 à 5 chaînons ou un cycle aziridinique cyclique comprenant de 3 à 5 chaînons, de préférence un groupe époxy, thioépoxy ou aziridine ; ou
   - un groupe isocyanate -N=C=O ou thioisocyanate -N=C=S ; et
(L) désigne un groupement hydrocarboné divalent, saturé ou insaturé, éventuellement cyclisé en tout ou partie, éventuellement interrompu par un ou plusieurs hétéroatomes choisis parmi O, N, S, P et Si, et éventuellement substitué.

Selon un mode plus spécifique de la quatrième variante, on peut utiliser des espèces réactives (E) contenant plus de deux groupements réactifs, par exemple 3 ou 4. Le cas échéant, on peut par exemple utiliser des espèces (E) comprenant des composés ayant la formule (III) précitée dans laquelle le groupe (L) est porteur d'au moins un groupement supplémentaire R14 choisi parmi les groupes incluant un groupement carbonyle α-β insaturé C=C-C=O, les groupes éthers cycliques comprenant de 3 à 5 chaînons, les groupes thioéthers cycliques comprenant de 3 à 5 chaînons, les cycle aziridinique cyclique comprenant de 3 à 5 chaînons , et les groupes isocyanates et thioisocyanate.

Selon un mode de réalisation avantageux de la quatrième variante du procédé de l'invention, les espèces (E) employées comprennent des composés répondant à l'une au moins des formules (IIIa) à (IIIe) suivantes :

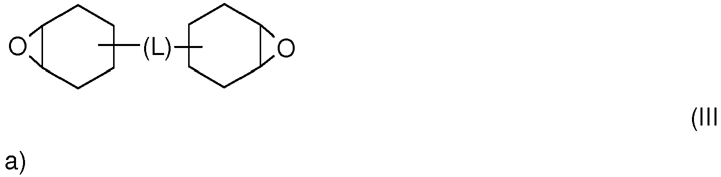

R^{e}-(L)-R'^{e} (III b)

O=C=N-(L)-N=C=O (III c)

R^{e}-(L)-N=C=O (III d)

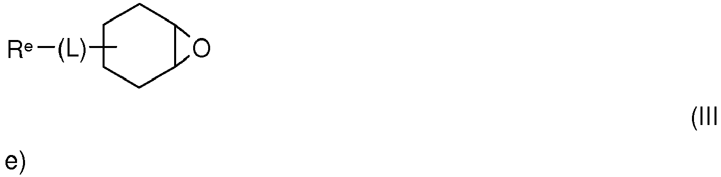

où : - le groupement (L) est tel que défini précédemment ;
- les groupements R^{e} et R^{'e}, identiques ou différents, représentent chacun un groupe porteur d'un groupe époxy, thioépoxy, ou aziridine (et de préférence porteur d'un groupe époxy ou thioépoxy).

Dans le cadre de la quatrième variante du procédé de l'invention, il est le plus souvent préférable de conduire l'étape (e) avec un rapport molaire (groupements réactifs/groupes -OH ou -SH) inférieur à 50%, avantageusement inférieur ou égal à 40%, plus préférentiellement inférieur à 30%, par exemple compris entre 5 et 20%, ce qui permet notamment de prévenir des phénomènes de gélification (voire de prise en masse) du milieu réactionnel dans l'étape (e) qui seraient sinon susceptibles de survenir.

Selon un autre aspect particulier, sont également décrites les espèces macromoléculaires de surface modifiée (notamment les polymères à structure dendritique de surface modifié et les particules minérales de surface modifié) telles qu'on peut les obtenir à l'issue de l'étape (e) du procédé de l'invention.

Dans ce cadre, des espèces macromoléculaires spécifiques incluent notamment:
- les espèces telles qu'obtenues à l'issue de la variante 1 du procédé de l'invention, qui comprennent des espèces macromoléculaires porteuses des fonctions de formule -O-(C=O)-CR9=CR10R11, -O-CR10R11-CR9-COOR8, -S-(C=O)-CR9=CR10R11 et/ou -S-CR10R11-CR9-COOR8,
   où les groupements R8, R9, R10 et R11 ont les significations précitées ;
- les espèces telles qu'obtenues à l'issue des modes de mise en oeuvre spécifiques de la variante 1 précités, qui comprennent des espèces macromoléculaires pontées entre elles par des groupements divalents de formule -O-CR10R11-CR8-C(=O)-O- ; -O-CR10R11-CR8-C(=O)-S- ; -S-CR10R11-CR8-C(=O)-O- ; et/ou -S-CR10R11-CR8-C(=O)-S-,
   où les groupements R8, R9, R10 et R11 ont les significations précitées ;
- les espèces telles qu'obtenues à l'issue à l'issue d'autres modes de mise en oeuvre spécifiques de la variante 1 précités, qui comprennent des espèces macromoléculaires portant des chaînes poly(méth)acrylates terminales ;
- les espèces telles qu'obtenues à l'issue de la variante 2 du procédé de l'invention, qui comprennent des espèces macromoléculaires porteuses de fonctions répondant à une ou plusieurs des formules suivantes : 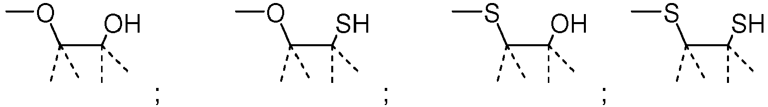 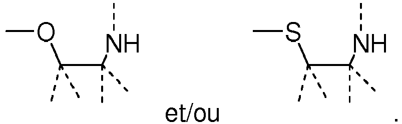
- Les espèces telles qu'obtenues à l'issue de la variante 4 du procédé de l'invention, incluant des espèces macromoléculaires pontées entre elles.

L'invention concerne également des espèces macromoléculaires de surface modifiée qui comprennent :
- des polymères (P) à structure dendritique de surface initialement porteurs de groupements -OH et/ou -SH, de préférence porteurs au moins de groupements - OH ; et/ou
- des particules minérales présentant initialement en surface des fonctions - OH et/ou -SH, de préférence au moins des groupements -OH ;
lesdites espèces macromoléculaires de surface modifiée étant susceptibles d'être obtenues par le procédé consistant en une étape (e2) dans laquelle des espèces macromoléculaires (M) ayant des dimensions d'au moins 5 nm, initialement porteuses de fonctions -OH et/ou -SH, sont mises en contact avec :
- un catalyseur (C) porteur d'au moins une fonction guanidine conjuguée ;
- des espèces réactives (E), comportant des groupements réactifs incluant :
   (i) au moins un groupe incluant un groupement carbonyle α-β insaturé C=C-C=O et/ou un groupement thiocarbonyle α-β insaturé C=C-C=S ; et/ou
   (ii) au moins un groupe hétérocyclique comprenant de 3 à 5 chaînons choisi parmi les éthers cycliques, les thioéthers cycliques et les cycles aziridiniques ; et/ou
   (iii) au moins un groupe choisi parmi les groupes isocyanate -N=C=O ou thioisocyanate -N=C=S, et les groupements trivalents de formule >C=CZ- , où Z est un groupe électroattracteur ; et le cas échéant
- un polymère (P) de structure dendritique obtenu par polymérisation de monomères de fonctionnalité supérieure à 2 catalysée par le catalyseur (C), ledit polymère (P) comportant :
   ▪ au moins deux fonctions OH et/ou SH et au moins une fonction réactive ; et/ou
   ▪ au moins deux fonctions réactives, et au moins une fonction OH et/ou SH ;
   où lesdites fonctions réactives portées par les monomères sont choisies parmi les groupes incluant un groupement carbonyle α-β insaturé C=C-C=O et/ou un groupement thiocarbonyle α-β insaturé C=C-C=S , les groupes éther cycliques comprenant de 3 à 5 chaînons ou thioéther cycliques comprenant de 3 à 5 chaînons ou cycles aziridiniques comprenant de 3 à 5 chaînons ; les groupes isocyanate -N=C=O, les groupe thioisocyanate -N=C=S , les groupements trivalents de formule >C=CZ- où Z est groupe électroattracteur, et les fonctions esters, thioester, amide, carbamate, thiocarbamates, phosphate ou sulfate, ces fonctions réactives incluant de préférence un groupement carbonyle α-β insaturé C=C-C=O.

De façon générale, les espèces macromoléculaires de surface modifiée telles qu'on les obtient à l'issue de l'étape (e) du procédé de l'invention sont utilisables en tant que telles, notamment à titre de charge ou d'agent actif dans des compositions diverses telles que des peintures, des vernis, des encres ou des adhésifs. Le cas échéant, le procédé de l'invention comprend avantageusement, à l'issue de l'étape (e), une étape de récupération des espèces macromoléculaires de surface modifiée formées, qui peut par exemple comprendre une étape de séparation de ces espèces d'éventuels impuretés ou solvants. Certaines espèces macromoléculaires de surface modifiées selon l'invention peuvent en particulier être employées pour la réalisation de revêtement anti-abrasion, comme cela est illustré dans l'exemple 10 ci-après.

Alternativement, les espèces macromoléculaires de surface modifiée obtenues à l'issue de l'étape (e) peuvent être utilisées à titre de matière première pour la préparation d'espèces macromoléculaires de surface encore davantage modifiée. Dans ce cas, le procédé de l'invention comprend, suite à l'étape (e), au moins une étape de modification de la surface des particules modifiées telles qu'obtenues à l'issue de l'étape (e). Lorsque les espèces macromoléculaires de surface modifiée obtenues à l'issue de l'étape (e) sont porteuses de fonctions -OH et/ou -SH, ces espèces peuvent être remises en oeuvre à titre d'espèces macromoléculaires dans une étape de traitement de surface selon l'invention, à savoir en présence d'un catalyseur porteur d'une fonction guanidine conjuguée et d'espèces réactives du type précité.

Ainsi, selon un mode de réalisation, l'invention est un procédé où l'étape (e) conduit à des espèces macromoléculaires de surface modifiée porteuses de fonctions -OH et/ou -SH, et le procédé comporte, suite à cette étape (e), au moins une étape de modification de surface (e^{'}), où les espèces macromoléculaires de surface modifiée porteuses de fonctions -OH et/ou -SH issue de l'étape (e) sont mises en contact avec :
- un catalyseur (C) porteur d'une fonction guanidine conjuguée, notamment du type précité; et
- des espèces réactives (E) comportant des groupements réactifs incluant
   (i) au moins un groupe incluant un groupement carbonyle α-β insaturé C=C-C=O ou un groupe thiocarbonyle α-β insaturé C=C-C=S; et/ou
   (ii) au moins un groupe hétérocyclique comprenant de 3 à 5 chaînons (de préférence 3 ou 4), choisi parmi les éthers cycliques, les thioéthers cycliques et les cycles aziridiniques (ce groupe étant de préférence au moins un groupe époxy, thioépoxy ou aziridine); et/ou
   (iii) au moins un groupe choisi parmi les groupes isocyanate -N=C=O ou thioisocyanate -N=C=S, et les groupements trivalents de formule >C=CZ'-, où Z' est un groupe électroattracteur.

Le catalyseur (C) mis en oeuvre dans les étapes (e) et (e') est généralement le même catalyseur, ce qui se traduit en termes de facilité de mise en oeuvre du procédé.

En particulier, les étapes (e) et (e') peuvent être mises en oeuvre au sein d'un une réacteur, sans séparation intermédiaire des espèces macromoléculaires modifiées obtenues à l'issue de l'étape (e). Cette possibilité de conduire selon un mode « one pot » les étapes (e) et (e') constitue encore un autre des nombreux avantages du procédé de la présente invention.

Les utilisations spécifiques précitées des espèces macromoléculaires de surface modifiée obtenue à l'issue de l'étape (e) font également l'objet de l'invention.

Différents aspects et avantages de l'invention ressortiront encore des exemples illustratifs et non limitatifs de mise en oeuvre de l'invention, qui sont donnés ci-après.

### EXEMPLES

Dans les exemples donnés ci-après, on a utilisé les composés suivants pour mettre en oeuvre des procédés de préparation d'espèces macromoléculaires de surface modifiées selon la présente invention :
- Un catalyseur bis-guanidine répondant à la formule (la) précité : 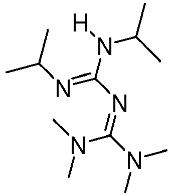 qui a été préparé selon le protocole expérimental suivant :
   Dans un ballon monocol de 100 mL, on a itroduit 5 g (soit 43,41 mmol) de 1,1,3,3-tétraméthylguanidine (Sigma Aldrich, Réf 241768, pureté 99%) et 5,47 g (soit 43,34 mmol) de N,N'-diisopropyl-carbodiimide (Acros Organics, Réf 115210250, pureté 99%). Sous agitation magnétique et sous atmosphère inerte d'azote, on a ajouté au milieu 20 mL de DMF anhydre. Le mélange a été porté à 90°C et agité pendant 10 heures. Le mélange a ensuite été concentré à l'évaporateur rotatif, puis recristallisé dans l'éther éthylique, ce par quoi on a obtenu 9,63 g du catalyseur recherché de formule (la) sous la forme d'un solide amorphe (rendement de 92%).
- Un catalyseur porteur de deux fonctions guanidines conjuguées entre elles, répondant à la formule l' précitée : 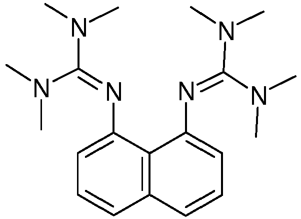 (catalyseur commercialisé par la société Fluka sous la référence 41541 ; pureté > 98,0%).
- Un monomère dit "monomère AB2", porteur d'une fonction ester et de deux fonctions alcool, de formule suivante: 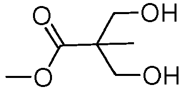 qui a été préparé selon le protocole expérimental suivant :
   Dans un ballon de 500 mL surmonté d'un réfrigérant, on a dissous 5 g (soit 37,27 mmol) d'acide 2,2-bis(hydroxyméthylpropionique) (Bis-MPA - Sigma-Aldrich Réf 106615, pureté 98%) et 354 mg (soit 1,86 mmol) d'APTS d'acide para-toluène sulfonique (APTS) monohydraté (Sigma Aldrich Réf 255378, pureté >99%) dans 250 mL de méthanol (Acros Organics, Réf 177150010 pureté 99% extra pure). Le mélange obtenu a est porté au reflux pendant 12h puis concentré à l'évaporateur rotatif. L'huile résiduelle a été dissoute dans 250 mL d'éther éthylique où on a ajouté 10g (soit 94,34 mmol) de carbonate de sodium : le mélange a été mis sous agitation à température ambiante pendant 10 minutes puis filtré. La solution d'éther éthylique obtenue a ensuite été lavée 3 fois avec 100 mL d'une solution saturée de NaHCO₃ puis séchée sur MgSO4. Par évaporation de l'éther, on a obtenu le monomère AB2 sous la forme de 4,93g d'une huile incolore (rendement de 89%).
- du 3,4-époxycyclohexylméthyl-3,4- époxycyclohexanecarboxylate, de formule suivante : 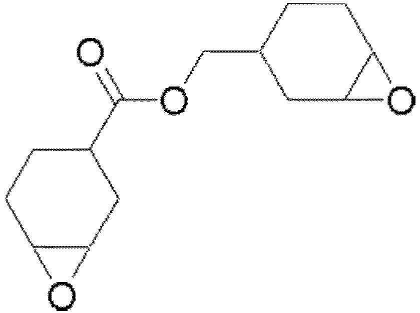 (commercialisé par la société Sigma-Aldrich Ref 407208, pureté, 99%)
- un méthacrylate de méthyle, désigné ci-après par MMA (polymère commercialisé par Acros Organics, Ref 127140025, pureté 99%+, stabilisé avec 15 ppm de MEHQ).
- du triméthylol propane éthoxylate (désigné ci-après par « TMP éthoxylate»), répondant à la formule suivante : 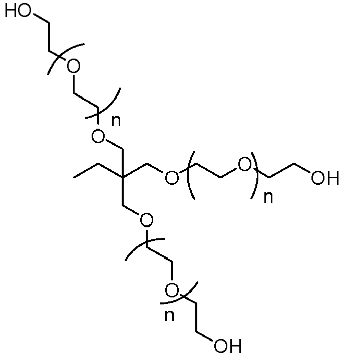 commercialisé par la société Sigma-Aldrich sous la référence 409782 (Mn ∼ 730 g/mol ; pureté > 97%);
- de l'isophorone diisocyanate, de formule : 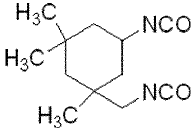 commercialisée par la société Fluka sous la référence 59192
- de l'acrylate de méthyle, de formule : 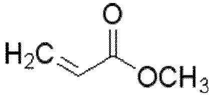 commercialisé par la société Sigma Aldrich sous la référence M27301 (pureté >99%, stabilisé par de la monométhyl ether hydroquinone)
- de l'éthanolamine (HO-CH₂-CH₂NH₂) commercialisée par la société ABCR (Ref AB110631, pureté 98%) ;
- du 2-mercaptoéthanol de formule (HS-CH₂-CH₂NH₂) commercialisé par la société Sigma Aldrich sous la référence M6250.
- un oligomère CN981 (oligomère uréthane acrylate commercialisé par la société Sartomer Europe
- de l'hexamediol diacrylate SR 238 commercialisé par la société Sartomer Europe
- de l'Irgacure 819 (photoamorceur UV/visible commercialisé par la société Ciba Speciality Chemicals

### Exemple 1 :

### Préparation d'un polymère acrylique hyper-ramifié (polymère P1)

### 1.1 synthèse de polymères polyester polyol

Dans un réacteur double enveloppe de 250 ml, équipé d'un système d'agitation mécanique et d'une colonne de condensation, on a introduit 126 g du monomère AB2. Le milieu a été porté à 85°C, et on a introduit 2,052 g du catalyseur de formule (la) Le mélange a été laissé sous agitation (250 tr/min) pendant 1 minute, puis placé sous un vide de -760 mmHg, sous agitation pendant 10 minutes.

### 1.2 fonctionnalisation et pontages des polymères polyester polyol (préparation de structures hyper-ramifiées)

Suite aux 10 minutes de réaction de l'étape 1.1, le milieu réactionnel a été porté à pression atmosphérique sous flux d'azote, la température de réaction à 116°C et la température du fluide circulant dans la colonne de condensation à - 20°C.

On a alors introduit de façon progressive 51 g de MMA dans le milieu. On a ensuite ajouté 0,820 g du catalyseur de formule (Ia).et 0,380 g de t-BuOK (co-catalyseur) ainsi que 50 mg de BHT (3,5-di-ter-butyl-4-hydroxytoluène), employé à titre de stabilisant. Le milieu a été laissé sous agitation (250 tr/min) pendant 3h.

On a ensuite ajouté 1,23 g du catalyseur de formule (Ia).et 0,57 g de co-catalyseur t-BuOK, et le milieu a été laissé sou agitation pendant 11h dans les mêmes conditions.

La température de réaction a ensuite été descendue jusqu'à 65°C en 45 minutes, puis un vide de -760 mmHg a été imposé dans le réacteur. Le mélange réactionnel a été laissé sous agitation dans ces conditions pendant 2h30.

### 1.3 pontage diurétane et fonctionnalisation acétate des structures hyper-ramifiées obtenues dans l'étape 1.2

Le mélange réactionnel a été replacé sous flux d'azote et la température de réaction a été montée à 70°C. On a alors introduit progressivement 3,78g de diisocyanate d'isophorone (Sigma-Aldrich Réf 59192, mélange de stéréoisomères, pureté 95%) en mélangeant vigoureusement le mélange réactionnel visqueux.

Après 1h30 d'agitation, on a ajouté 34,76 g d'anhydride acétique au mélange réactionnel. On a laissé réagir pendant 7h puis la température de réaction est redescendue à 35°C.

125 ml d'eau ont alors été ajoutés au mélange réactionnel et le polymère en suspension a été extrait par décantation pendant 10 minutes. Après décantation, le polymère a été séparé de la phase aqueuse puis est ré-extrait avec 4x125 ml d'eau distillée, puis 2x125 ml d'acide sulfurique 0,1N et 2x125 ml d'eau distillée.

Après séchage sous vide à 85°C pendant 24h, on a obtenu le polymère P1 sous la forme de 139 g d'une huile visqueuse.

### Exemple 2 :

### Synthèse d'un polymère hyper-ramifié acrylique (polymère P2)

### 2.1 synthèse de polymères polyester polyol

Dans un réacteur double enveloppe de 250 ml, équipé d'un système d'agitation mécanique et d'une colonne de condensation, on a introduit 150 g du monomère AB2. Le milieu a été porté à 85°C, et on a introduit 2,44 g du catalyseur de formule (la). Le mélange a été laissé sous agitation (250 tr/min) pendant 1 minute, puis placé sous un vide de -760 mmHg, sous agitation pendant 10 minutes.

### 2.2 fonctionnalisation et pontages des polymères polyester polyol (préparation de structures hyper-ramifiées)

Suite aux 10 minutes de réaction de l'étape 1.1, le milieu réactionnel a été porté à pression atmosphérique sous flux d'azote, la température de réaction à 116°C et la température du fluide circulant dans la colonne de condensation à - 20°C.

On a alors introduit de façon progressive 40,54 g de MMA et 12,88g d'hexanediol diméthacrylate (Sigma-Aldrich, Réf 411736, pureté 95%), puis 0,977 g du catalyseur de formule (la), ainsi que 0,455 g de co-catalyseur t-BuOK et 240 mg de stabilisant BHT. Le milieu a été laissé sous agitation (250 tr/min) pendant 3h.

On a ensuite ajouté 0,977 g du catalyseur de formule (la) et 0,455 g de co-catalyseur t-BuOK, le milieu a été laissé sou agitation pendant 11h dans les mêmes conditions.

La température de réaction a ensuite été descendue jusqu'à 65°C en 45 minutes, puis un vide de -760 mmHg a été imposé dans le réacteur. Le mélange réactionnel a été laissé sous agitation dans ces conditions pendant 2h30.

### 2.3 fonctionnalisation acétate des structures hyper-ramifiés obtenues dans l'étape 2.2

Le mélange réactionnel a été replacé sous flux d'azote et la température de réaction a été montée à 70°C. On a alors ajouté au mélange réactionnel 62,08 g d'anhydride acétique ainsi que 371 mg de DMAP (4-dimethylaminopyridine). On a laissé le milieu réagir pendant 7h, puis la température de réaction a été redescendue à 35°C.

150 ml d'eau ont alors été ajoutés au mélange réactionnel et le polymère en suspension a été extrait par décantation pendant 10 minutes. Après décantation, le polymère a été séparé de la phase aqueuse puis a été ré-extrait avec 4x150 ml d'eau distillée, puis 2x150 ml d'acide sulfurique 0,1N et 2x150 ml d'eau distillée.

Après séchage sous vide à 85°C pendant 24h, on a obtenu le polymère P2 sous la forme de 169 g d'une pâte visqueuse.

### Exemple 3 :

### Synthèse d'un polymère hyper-ramifié acrylique (polymère P3)

### 3.1 synthèse de polymères hyper-ramifiés à coeur polyester polyol

Dans un réacteur double enveloppe de 250 ml, équipé d'un système d'agitation mécanique, d'une colonne de condensation et d'une ampoule de coulée contenant 117,6 g du monomère AB2, on introduit 7,615 g de TMP (triméthylolpropane commercialisé par Acros Organics, Réf 164650025, pureté 98%) et 8,4 g du monomère AB2.

Le milieu a été porté à 85°C, et on a introduit 0,137 g (Acros Organics, Réf 164650025, pureté 98%). Le mélange a été agité pendant 1 minute (250 tr/min) puis placé sous un vide de -760 mmHg. Le mélange a alors été laissé sous agitation pendant 5 minutes, puis a été replacé à pression atmosphérique.

Les 117,6 g du monomère AB2 contenus dans l'ampoule de coulée o,nt alors été versés dans le réacteur et on a jouté encore 1,915 g du catalyseur de formule (la). Le milieu a ensuite été laissé sous agitation sous vide (-760 mmHg) pendant 10 minutes.

### 3.2 pontages des polymères polyester polyol par un composé diépoxyde

Le milieu issu de l'étape précédente a été porté à pression atmosphérique sous flux d'azote, et la température de réaction portée à 110°C, et la température du fluide circulant dans la colonne de condensation à -5°C.

On a alors ajouté au milieu 6,015 g de 3,4-époxycyclohexylmethyl-3,4-époxycyclohexanecarboxylate (Sigma-Aldrich Ref 407208, pureté > 99%). Le mélange visqueux a été agité pendant 5 h.

On a ensuite ajouté progressivement au milieu 42,56 g de MMA, puis 1,026 g du catalyseur de formule (la), ainsi que 0,478 g de co-catalyseur t-BuOK et 200 mg de stabilisant BHT. Le milieu a été agité (250 tr/min) pendant 3h.

On a ensuite ajouté 1,026 g du catalyseur de formule (la) et 0,478 g de co-catalyseur t-BuOK, et le milieu a été agité pendant 11h dans les mêmes conditions.

La température de réaction est descendue à 65°C en 45 minutes. Le mélange réactionnel a alors été replacé sous vide (-760 mmHg) et a été agité pendant 2h30.

### 3.3 fonctionnalisation acétate des structures hyper-ramifiés obtenues dans l'étape 3.2

Le mélange réactionnel issu de l'étape 2.2 a été replacé sous flux d'azote et la température de réaction à 70°C. 42,56 g d'anhydride acétique ont été ajoutés au mélange réactionnel, ainsi que 312 mg de DMAP. On a laissé le milieu réagir pendant 7h puis la température de réaction est redescendue à 35°C.

125 ml d'eau ont alors été ajoutés au mélange réactionnel et le polymère en suspension a été extrait par décantation pendant 10 minutes. Après décantation, le polymère a été séparé de la phase aqueuse puis a été ré-extrait avec 4x125 ml d'eau distillée, puis 2x125 ml d'acide sulfurique 0,1N et 2x125 ml d'eau distillée.

Après séchage sous vide à 85°C pendant 24h, on a obtenu le polymère P3 sous la forme de 153 g d'une huile visqueuse.

### Exemple 4 :

### Synthèse d'un polymère hyper-ramifié époxy (polymère P4)

### 4.1 synthèse de polymères hyper-ramifiés à coeur polyester polyol

Dans un réacteur double enveloppe de 250 ml, équipé d'un système d'agitation mécanique, d'une colonne de condensation et d'une ampoule de coulée contenant 117,6 g du monomère AB2, on introduit 7,615 g de TMP (triméthylolpropane - Acros Organics, Réf 164650025, pureté 98%) et 8,4 g du monomère AB2.

Le milieu a été porté à 85°C, et on a introduit 0,137 g du catalyseur de formule (la). Le mélange a été agité pendant 1 minute (250 tr/min) puis placé sous un vide de -760 mmHg. Le mélange a alors été laissé sous agitation pendant 5 minutes, puis a été replacé à pression atmosphérique.

Les 117,6 g du monomère AB2 contenus dans l'ampoule de coulée o,nt alors été versés dans le réacteur et on a jouté encore 1,915 g du catalyseur de formule
(la). Le milieu a ensuite été laissé sous agitation sous vide (-760 mmHg) pendant 10 minutes.

### 4.2 fonctionnalisation polymères polyester polyol par un composé diépoxyde

Le milieu issu de l'étape 4.1 a été porté à pression atmosphérique sous flux d'azote, la température de réaction à 110°C et la température du fluide circulant dans la colonne de condensation à -5°C.

85,13 g de 3,4-époxycyclohexylmethyl-3,4-époxycyclohexanecarboxylate ont alors été ajoutés au milieu visqueux ainsi que 2,052 g du catalyseur de formule (la). Le mélange obtenu a été laissé sous agitation pendant 12 h.

125 ml d'eau ont alors été ajoutés au mélange réactionnel et le polymère en suspension a été extrait par décantation pendant 10 minutes. Après décantation, le polymère a été séparé de la phase aqueuse puis a été ré-extrait avec 4x125 ml d'eau distillée, puis 2x125 ml d'acide sulfurique 0,1N et 2x125 ml d'eau distillée.

Après séchage sous vide à 85°C pendant 24h, on a obtenu le polymère P4 sous la forme de 181 g d'une huile visqueuse.

### Exemple 5 : Synthèse d'un nanomatériau de type "core-shell" à coeur inorganique et écorce polymère

Dans cet exemple, on a utilisé les composés suivants :

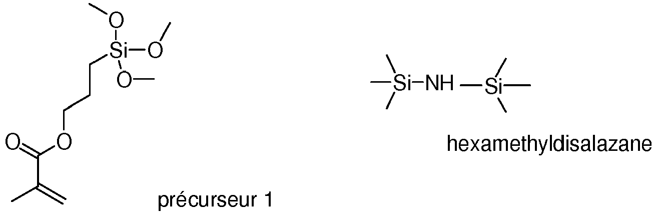

(Le precurseur 1 est un 3-(methacryloyloxy)propyltrimethoxysilane à 97% commercialisé par ABCR (Réf AB11767) ; L'hexamethyldisilazane est celle commercialisée par la société Fluka (Réf 52620, pureté >98%))

Dans un réacteur de 500 ml équipé d'une pâle d'agitation mécanique, d'une colonne réfrigérante de type Vigreux, on a introduit 150 ml d'eau distillée avec une température du milieu réactionnel de 40°C. On a ajouté 10 g de tétraméthylorthosilicate (Sigma Aldrich, Réf 341436, pureté >99%) et on a laissé le milieu sous agitation pendant 1 heure.

On a ainsi obtenu un sol de particules de silice.

On a ensuite ajouté 12 g du précurseur 1 tel que défini ci-dessus, dissous dans 10 ml d'éthanol et on a laissé le milieu sous agitation pendant 30 minutes.

On a ensuite ajouté progressivement 2 g d'hexamethyldisilazane (Fluka Réf 52620, pureté >98%), en une durée de 10 minutes. La température du milieu réactionnel a ensuite été portée à 60°C. Après 45 minutes d'agitation, le réacteur a été placé sous vide (à 100 mbar pendant 5h, puis à 13 mbar pendant 3h).

On a ensuite ajouté au milieu réactionnel, à pression atmosphérique, 21,45g de monomère AB2. La température du milieu réactionnel a été portée à 90°C, et le mélange a été laissé sous agitation pendant 45 minutes sous atmosphère inerte à pression atmosphérique.

On a ensuite ajouté 232 mg du catalyseur C₁ de formule (la), et la température a été portée à 120°C.

On a ainsi obtenu une fonctionnalisation des particules de silice, selon le schéma 1 ci-dessous :

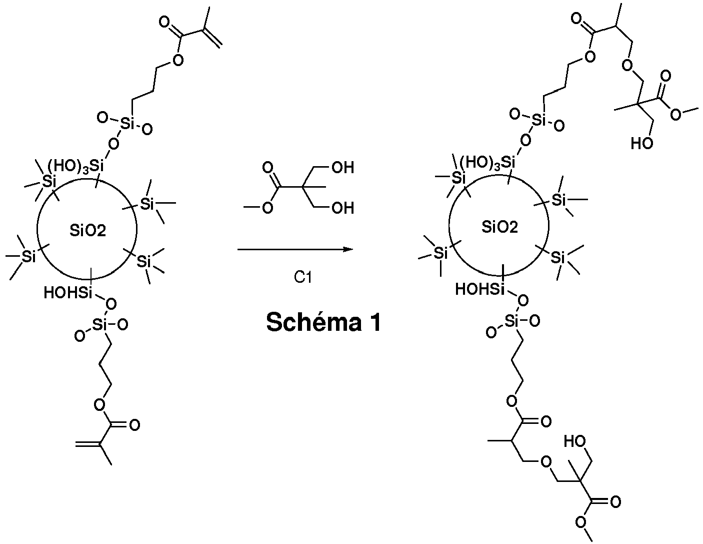

Après 12 heures d'agitation, le mélange réactionnel a été refroidi à 90°C et on a introduit dans le réacteur, à pression atmosphérique, 69 g de monomère AB2 et 2,24 g du catalyseur de formule (Ia). Sous agitation, on a diminué progressivement la pression jusqu'à 13 mbar. On a laissé le milieu sous agitation pendant 15 minutes au cours desquelles la viscosité du mélange a augmenté.

On a alors obtenu, schématiquement, la réaction décrite sur le schéma 2 ci-dessous :

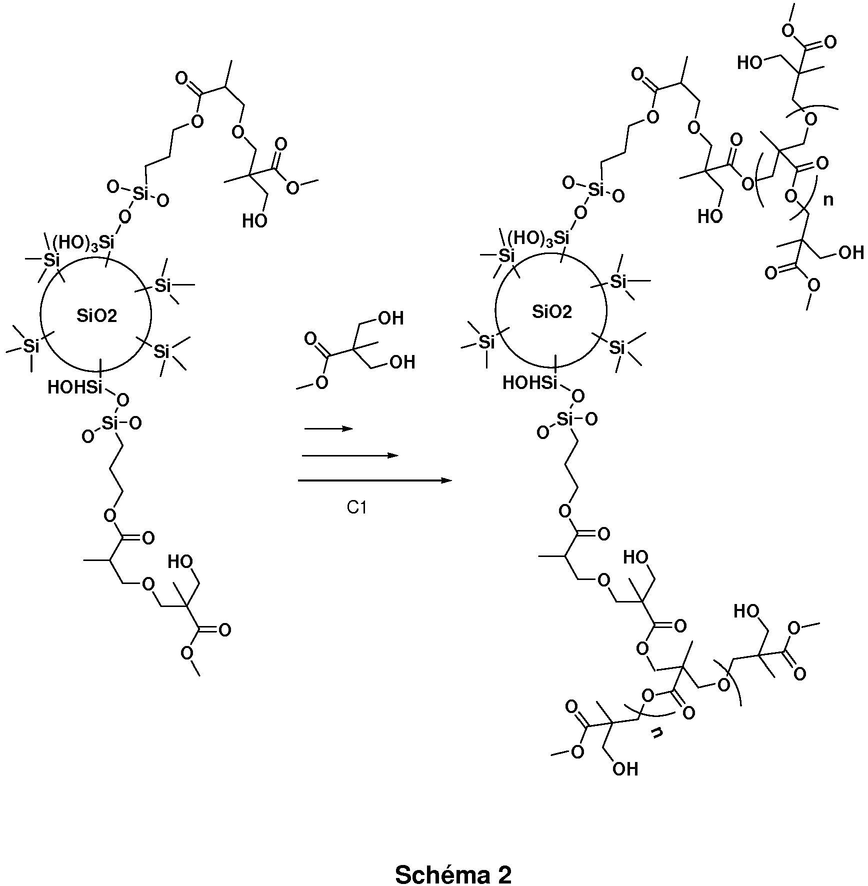

On a alors ajouté au mélange réactionnel 61,20g de MMA ainsi que 150 mg de stabilisant BHT et 2,24g de catalyseur bis-guanidine. Après homogénéisation, le mélange a été purgé à l'azote et maintenu sous atmosphère inerte à pression atmosphérique, et la température portée à 120°C. Le mélange réactionnel a été agité dans ces conditions pendant 15h.

La température du milieu a ensuite été redescendue à 70°C et un système de distillation avec rectificateur a été adapté en tête de la colonne Vigreux. La pression est descendue à 70 mbar pendant 5h puis à 13mbar pendant 3h.

On a ainsi obtenu la réaction du schéma 3 ci-dessous (où la formule de gauche représente les particules de silice modifiées obtenues à la fin du schéma 2) :

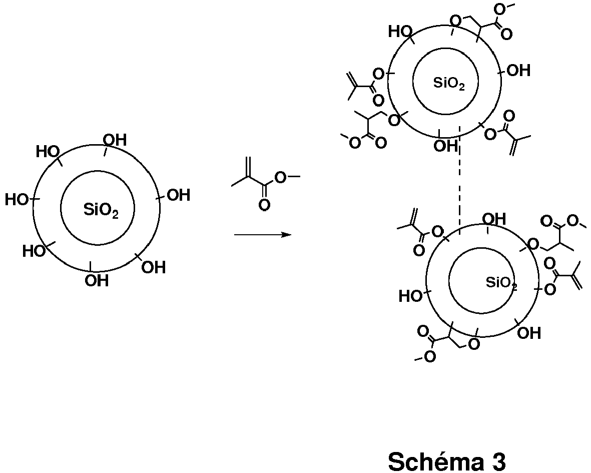

### Exemple 6 : Synthèse d'un nanomatériau de type "core-shell" à coeur inorganique et écorce polymère

Dans cet exemple, on a préparé des particules de silices modifiées et réticulées de structures proches de celles obtenues dans l'exemple 6 précédents.

On a préparé un sol de particules de silice comme dans l'exemple précédent (dans un réacteur de 500 ml équipé d'une pâle d'agitation mécanique, d'une colonne réfrigérante de type Vigreux, en introduisant 150 ml d'eau distillée et 10g de tétraméthylorthosilicate laissé sous agitation pendant 1 heure à 40°C).

On a ensuite ajouté ensuite 8g de 3-aminopropyltriethoxysilane dissous dans 8 ml d'éthanol et on a laisse de nouveau sous agitation pendant 30 minutes.

On a ensuite ajouté 1,5g d'hexamethyldisilazane progressivement, en une durée de 10 minutes et la température du milieu réactionnel a ensuite été portée à 50°C. Après 1 heure d'agitation, le montage a été placé sous vide à 100 mbar pendant 7h puis à 13 mbar pendant 3h, à une température de 75°C.

On a alors ajouté au milieu réactionnel, à pression atmosphérique, 90,45g de monomère AB2. La température du milieu réactionnel a été portée à 90°C et le mélange obtenu a été laissé sous agitation pendant 45 minutes sous atmosphère inerte à pression atmosphérique.

On a alors ajouté 2,93 g du catalyseur de formule (la) et on place le montage sous vide (13 mbar) pendant 20 minutes.

On a alors ajouté au mélange réactionnel 61,20g de MMA ainsi que 150 mg de stabilisant BHT et 2,24g du catalyseur de formule (la).

Après homogénéisation, le mélange a été purgé à l'azote et maintenu sous atmosphère inerte (pression atmosphérique), et la température a été portée à 120°C. Le mélange réactionnel obtenu a été laissé sous agitation pendant 15h.

La température a ensuite été redescendue à 70°C, et un système de distillation avec rectificateur a été adapté en tête de la colonne Vigreux. La pression a été réduite à 70 mbar pendant 5h puis à 13mbar pendant 3h.

On a ainsi obtenu une pâte visqueuse qui a été lavée trois fois avec 150 ml d'éther éthylique, puis deux fois avec une solution aqueuse molaire d'acide sulfurique de 150 ml et enfin avec trois fois 150 ml d'eau distillée. Après séchage sous vide 13 mbar pendant 12h), on a récupère 101 g d'une résine visqueuse transparente.

### Exemple 7 Synthèse d'un polyuréthane aliphatique hyper-ramifié fonctionnalisé acrylate présence du catalyseur (I') :

Dans un réacteur double enveloppe de 250 mL, équipé d'un système d'agitation mécanique, d'une colonne de condensation de type Vigreux et d'une ampoule à addition, on a introduit 50g de TMP éthoxylate et 546 mg de catalyseur de formule (I') défini plus tard dans la présente description. On a introduit dans l'ampoule 6,1g d'isophorone diisocyanate et on a placé le montage sous atmosphère inerte. On a porté la température à 70°C et on a agité le milieu à 250 tr/min. On a ensuite introduit ensuite au goutte à goutte sur une période de 10 minutes la totalité de l'isophorone diisocyanate, ce par quoi on a obtenu une augmentation rapide de la viscosité du mélange. Après 30 minutes d'agitation, on a porté la température à 85°C.

On a ainsi obtenu un polyuréthane polyol hyper-ramifié.

On a ajouté dans l'ampoule à addition 13g d'acrylate de méthyle et 20 mg de BHT et on a replacé le montage sous atmosphère inerte. On a progressivement additionné progressivement le mélange acrylate de méthyle et BHT. Après homogénéisation complète du polymère et de l'acrylate de méthyle, on a élevé la température à 108°C. Le mélange obtenu a été maintenu sous atmosphère inerte à pression atmosphérique et sous agitation pendant 9h.

La température du milieu a ensuite été redescendue à 70°C et un système de distillation avec rectificateur a été adapté en tête de la colonne Vigreux. La pression a été descendue à 200 mbar pendant 1h, puis à 160 mbar pendant 1h, puis à 120 mbar pendant 1h, puis à 70 mbar pendant 1h, puis à 50 mbar pendant 30 minutes et enfin à 25 mbar pendant 1h30.

On a ainsi obtenu 64,55g d'une résine transparente brun violet qui est un polyuréthane hyper-ramifié dont les extrémités ont été fonctionnalisés partiellement par des groupes acrylates et des groupes issus de l'addition de Michaël des groupes hydroxy périphériques sur l'acrylate de méthyle.

### Exemple 8 - Synthèse d'un matériau hybride de type coeur/écorce (core-shell) à coeur inorganique et écorce polymère :

Dans un réacteur de 500 mL équipé d'une pale d'agitation mécanique, d'une colonne réfrigérante de type Vigreux, on a introduit 150 mL d'eau distillée avec une température de milieu réactionnel de 40°C. On a ajouté 12 g de tétraméthylorthosilicate (Sigma Aldrich, Réf 341436, pureté > 99%) et on a laissé le milieu sous agitation pendant 1 heure.

On a ainsi obtenu un sol de particules de silice.

On a ensuite ajouté 6g du précurseur 1 tel que défini dans l'exemple 5, dissous dans 5 mL d'éthanol et on a laissé le milieu sous agitation pendant 30 minutes.
On a ensuite ajouté progressivement 1,5g d'hexaméthyldisilazane (Fluka réf 52620, pureté > 98%), en une durée de 10 minutes. La température du milieu réactionnel a ensuite été portée à 60°C. Après 45 minutes d'agitation, le réacteur a été placé sous vide (à 100 mbar pendant 5h, puis à 13 mbar pendant 0h30).

On a ensuite ajouté au milieu réactionnel 1,22g d'éthanolamine, puis la température a été portée à 50°C. On a laissé son agitation pendant 1h30. La réaction effectuée est représentée sur le schéma 4 ci-dessous :

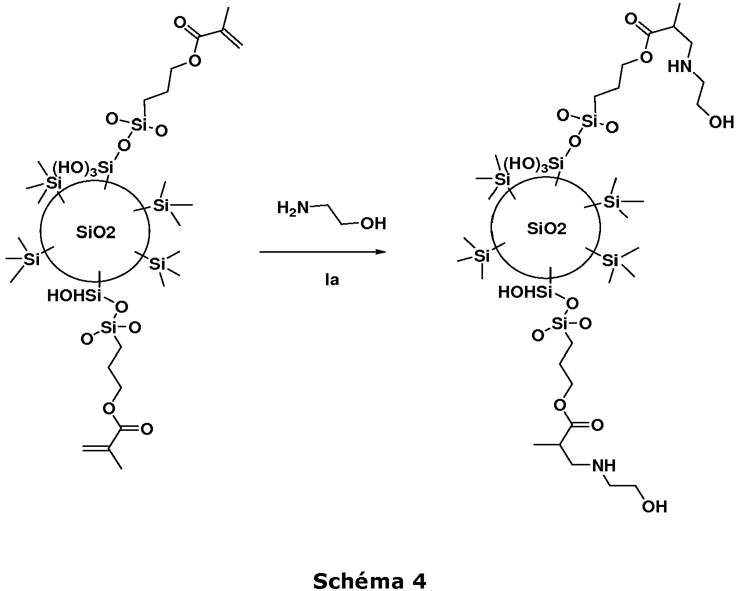

On a ensuite ajouté au milieu réactionnel 69g de monomère AB2. La température du milieu a été portée à 90°C et le mélange a été laissé sous agitation pendant 30 minutes. En laissant le milieu sous agitation, on a diminué progressivement la pression jusqu'à 20 mbar pendant 1h.

On a ensuite ajouté 2,24g du catalyseur (la) et la température a été portée à 100°C. Sous agitation, on a diminué progressivement la pression jusqu'à 30 mbar et on a laissé le milieu sous agitation pendant 50 minutes, ce qui a conduit à une augmentation de la viscosité.

La réaction réalisée est représentée sur le schéma 5 ci-dessous :

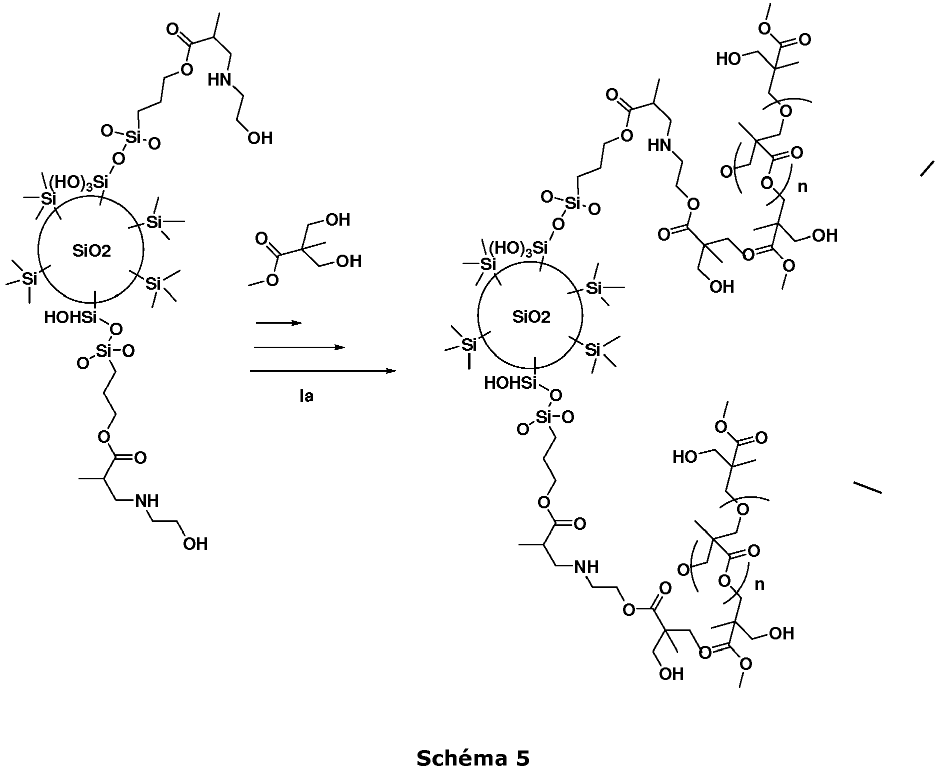

On a alors ajouté au mélange réactionnel 52g d'acrylate de méthyle ainsi que 150 mg de stabilisant BHT et 1,1g de catalyseur (la). Après homogénéisation, le mélange a été purgé à l'azote et maintenu sous atmosphère inerte sous pression atmosphérique. La température a alors été portée à 110°C et on a laissé le mélange réactionnel sous agitation dans ces conditions durant 10h.

La température du milieu réactionnel a ensuite été redescendue à 70°C et un système de distillation avec rectificateur a été adapté en tête de colonne Vigreux. La pression a ensuite été descendue à 200 mbar pendant 1h, puis à 160 mbar pendant 1h, puis à 120 mbar pendant 1h, puis à 70 mbar pendant 1h, puis à 50 mbar pendant 30 minutes et enfin à 25 mbar pendant 1h30.

On a ainsi obtenu la formulation des particules de structure modifiées selon le schéma 6 ci-dessous :

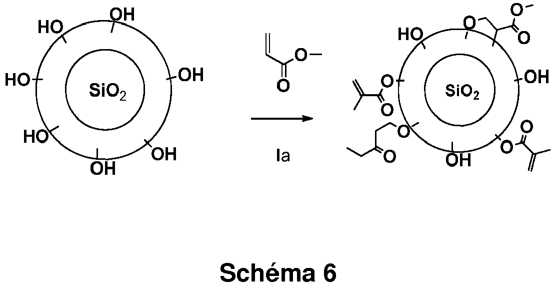

Les particules de surface modifiée ainsi obtenues *in fine* se présentent sous la forme de 104 g d'une résine visqueuse transparente faiblement colorée (jaune). Une caractérisation de ce produit par ATG (analyse thermo-gravimétrique) montre qu'il contient 11% en masse de matière inorganique.

### Exemple 9 - Synthèse d'un matériau de type coeur/écorce (core-shell) à coeur inorganique et écorce polymère comportant des groupes périphériques de type-SCH₂CH₂OH (modification de la surface du matériau de l'exemple 8).

Dans un ballon monocol de 25 mL équipé d'un barreau aimanté, on introduit 6,70g du nanomatériau préparé dans l'exemple 8.

On a additionné à ce mélange 330 mg de 2-mercapto-éthanol ainsi que 15mg de catalyseur (la). On a surmonté le monocol d'une colonne de condensation de type Vigreux et on a placé le montage sous atmosphère inerte.
Le milieu réactionnel a été mis sous agitation à l'aide d'une plaque d'agitation magnétique, et on a porté le mélange réactionnel à une température de 106°C. On a laissé sous agitation pendant 10h et on a ensuite porté le milieu réactionnel sous un vide de 25 mbar pendant 15 minutes. La température est ensuite redescendue à température ambiante.
A l'issue de ces étapes on obtient 7,05 g d'une résine transparente.

Le traitement effectué dans le présent exemple conduit à une disparité substantielle des groupements périphériques acrylates du matériau de l'exemple 8 qui sont remplacés par des groupements -SCH₂CH₂OH (obtenus par addition de Michaël du 2-mercaptoéthanol sur les acrylates).

### Exemple 10 - Formulation anti-abrasive comprenant le matériau composite de l'exemple 8:

On a préparé une formulation photo-polymérisable à partir du matériau composite de l'exemple 8 selon le protocole ci-dessous.

Dans un réacteur double enveloppe en inox de 1L, on introduit successivement, à 25°C (à l'abri de toute source de lumière UV et/ou visible) :
- 100g du matériau composite obtenu à l'exemple 8 ;
- 200g de CN981 (oligomère uréthane acrylate)
- 200g de SR238 (hexanediol diacryate)
- 5g d'Irgacure 819 (photo-amorceur UV/Visible)

On a porté la température à 50°C et on mélange à 250 tr/min pendant 30 minutes.
Le mélange obtenu, qui contient 2,2% de nanoparticules de silice parfaitement dispersées est parfaitement transparent et homogène. La viscosité à 25°C de la formulation, telle que mesurée à l'aide d'un Rhéomètre AR 2000 DE AT-Instruments est de 50 cPs.

La formulation obtenue a été étalée sur une plaque de polycarbonate Makrolon (Bayer) de 5 cm x 5 cm selon la technique dite de « *flow coating ».* Par irradiation UV du film obtenu (banc UV Fusion UV équipé d'un bulbe H on a obtenu sur la plaque un film complètement réticulé qui peut être utilisé, notamment à titre de revêtement protecteur anti-abrasion.

## Revendications

1. Procédé de préparation d'espèces macromoléculaires de surface modifiée, comprenant une étape (e) dans laquelle des espèces macromoléculaires ayant des dimensions d'au moins 5 nm (M), initialement porteuses de fonctions -OH et/ou -SH, sont mises en contact avec :
- un catalyseur (C) porteur d'au moins une fonction guanidine conjuguée ; et
- des espèces réactives (E), comportant des groupements réactifs incluant :
(i) au moins un groupe incluant un groupement carbonyle α-β insaturé C=C-C=O et/ou un groupement thiocarbonyle α-β insaturé C=C-C=S ; et/ou
(ii) au moins un groupe hétérocyclique comprenant de 3 à 5 chaînons choisi parmi les éthers cycliques, les thioéthers cycliques et les cycles aziridiniques ; et/ou
(iii) au moins un groupe choisi parmi les groupes isocyanate -N=C=O ou thioisocyanate -N=C=S, et les groupements trivalents de formule >C=CZ- , où Z est un groupe électroattracteur.

2. Procédé selon la revendication 1, où le catalyseur (C) comprend une fonction bis-guanidine conjuguée et répond à la formule (I) suivante : 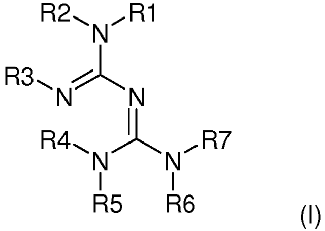 où chacun des groupements R1 à R7 représente, indépendamment des autres groupements :
- un atome d'hydrogène ; ou
- un groupe cyano -CN ; ou
- une chaîne hydrocarbonée, saturée ou insaturée, linéaire ou ramifiée, éventuellement cyclisée en tout ou partie, éventuellement substituée, et éventuellement interrompue par un ou plusieurs hétéroatomes et/ou groupements porteurs d'hétéroatomes, cette chaîne hydrocarbonée étant de préférence un groupe alkyle comportant de 1 à 4 atomes de carbone.

3. Procédé selon la revendication 1, où le catalyseur (C) est porteur de deux fonctions guanidines conjuguées entre elles.

4. Procédé selon l'une quelconque des revendications 1 à 3, où les espèces macromoléculaires (M) comprennent des polymères à structure dendritique initialement porteurs de groupements -OH et/ou -SH, de préférence porteurs au moins de groupements -OH.

5. Procédé selon la revendication 4, où les espèces macromoléculaires (M) sont des polymères à structure dendritiques obtenus par polymérisation de monomères de fonctionnalité supérieure à 2 en présence d'un catalyseur (C) tel que défini dans l'une des revendications 1 à 4, le procédé comprenant les étapes suivantes :
(e1) on forme un polymère (P) de structure dendritique par une polymérisation catalysée par le catalyseur (C) de monomères comportant :
- au moins deux fonctions OH et/ou SH et au moins une fonction réactive ; et/ou
- au moins deux fonctions réactives, et au moins une fonction OH et/ou SH ; où lesdites fonctions réactives portées par les monomères sont choisies parmi les groupes incluant un groupement carbonyle α-β insaturé C=C-C=O et/ou un groupement thiocarbonyle α-β insaturé C=C-C=S, les groupes éther cycliques comprenant de 3 à 5 chaînons ou thioéther cycliques comprenant de 3 à 5 chaînons ou cycles aziridiniques comprenant de 3 à 5 chaînons ; les groupes isocyanate -N=C=O, les groupe thioisocyanate -N=C=S , les groupements trivalents de formule >C=CZ- où Z est groupe électroattracteur, et les fonctions esters, thioester, amide, carbamate, thiocarbamates, phosphate ou sulfate, ces fonctions reactives incluant de préférence un groupement carbonyle α-β insaturé C=C-C=O.
puis
(e2) on met en contact le polymère P de structure dendritique ainsi obtenu, qui est porteur de fonctions périphériques -OH ou -SH, avec des espèces réactives (E) et le catalyseur (C).

6. Procédé selon l'une quelconque des revendications 1 à 3, où les espèces macromoléculaires (M) comprennent des particules minérales présentant initialement en surface des groupements -OH ou -SH, de préférence au moins des groupements -OH.

7. Procédé selon l'une quelconque des revendication 1 à 6, où, dans l'étape (e) de mise en contact des espèces macromoléculaires (M), des espèces réactives (E) et du catalyseur (C), le ratio molaire (catalyseur/espèces réactives) de la quantité de catalyseur C rapportée à la quantité totale des groupements réactifs présents sur les espèces réactives (E) est compris entre 0,05% et 10%.

8. Procédé selon l'une quelconque des revendications 1 à 7, où les espèces réactives (E) sont des composés comportant au moins un groupement carbonyle α-β insaturé C=C-C=O et/ou au moins un groupement thiocarbonyle α-β insaturé C=C-C=S, de préférence des composés répondant à la formule (II) suivante : 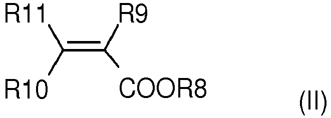 où :
- le groupe R8 est un groupe alkyle, linéaire ou ramifié, de préférence un groupe alkyle comportant de 1 à 12 atomes de carbone ; ou une chaîne hydrocarbonée, saturée ou insaturée, linéaire ou ramifiée, éventuellement cyclisée en tout ou partie, éventuellement substituée, et éventuellement interrompue par un ou plusieurs hétéroatomes choisis parmi N, O, S, P et Si ; et
- les groupes R9, R10 et R11 représentent chacun, indépendamment, un atome d'hydrogène, un groupe alkyle linéaire ou ramifié, ou une chaîne hydrocarbonée, saturée ou insaturée, linéaire ou ramifiée, éventuellement cyclisée en tout ou partie, éventuellement substituée, et éventuellement interrompue par un ou plusieurs hétéroatomes choisis parmi N, O, S, P et Si.

9. Procédé selon la revendication 8 où :
- l'étape (e) est conduite sous une pression de 7.10⁴ à 10⁵ Pa, de préférence à une température comprise entre 70 et 180°C ;
et/ou
- l'étape (e) est conduite avec un rapport molaire de la quantité de groupements réactifs présents sur les espèces (E) rapporté à la quantité de groupes -OH et/ou -SH portés par les espèces (M) d'au plus 75%, de préférence à une température comprise entre 70°C et 180°C,
ce par quoi la fonctionnalisation des espèces (M) effectuée dans l'étape (e) s'accompagne d'un couplage entre les espèces (M).

10. Procédé selon la revendication 8 où :
- l'étape (e) est conduite à une pression supérieure sous une pression supérieure à 2.10⁵ Pa, de préférence à une température supérieure à 100°C ;
et/ou
- l'étape (e) est conduite avec un rapport molaire de la quantité de groupements réactifs présents sur les espèces (E) rapporté à la quantité de groupes -OH et/ou -SH portés par les espèces (M) supérieur d'au moins 100%, de préférence à une température supérieure à 100°C,
ce par quoi la fonctionnalisation des espèces (M) de l'étape (e) s'opère essentiellement sans phénomène de couplage entre les espèces (M).

11. Procédé selon l'une des revendications 8 à 10, où la mise en contact des espèces macromoléculaires (M), des espèces réactives (E) et du catalyseur (C) est faite en présence d'un co-catalyseur de polymérisation anionique, ce par quoi on obtient la formation de chaînes poly(méth)acrylates terminales sur les espèces (M) à l'issue de l'étape (e).

12. Procédé selon l'une quelconque des revendication 1 à 7, où les espèces réactives (E) sont des composés comprenant des groupements hétérocycliques ayant de 3 à 5 chaînons, choisis parmi les éthers cycliques, les thioéthers cycliques et les cycles aziridiniques, ces espèces réactives (E) étant des composés comportant un groupe époxy, thioépoxy ou aziridine, respectivement de formules : 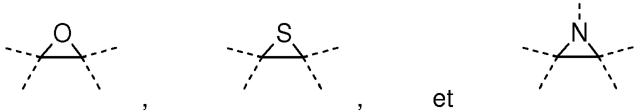 ce par quoi ces groupes réagissent avec les groupements -OH et/ou -SH présents sur les espèces (M) pour conduire respectivement à la formation, sur lesdites espèces (M), de fonctions de formules :

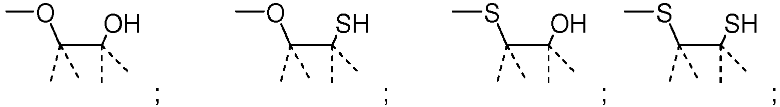

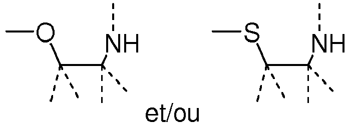

13. Procédé selon l'une quelconque des revendication 1 à 12, où les espèces réactives (E) comprennent des composés difonctionnels comportant au moins deux groupements choisis parmi les groupes comprenant au moins un groupement carbonyle α-β insaturé C=C-C=O et/ou thiocarbonyle α-β insaturé C=C-C=S, les groupes hétérocycliques comprenant de 3 à 5 chaînons choisis parmi les éthers cycliques, thioéthers cycliques ou cycles aziridiniques, les groupes isocyanates, les groupes thioisocyanate -N=C=S, et les groupes de formule >C=CZ-où Z est groupe électroattracteur, ce par quoi on obtient un pontage des espèces (M).

14. Espèces macromoléculaires de surface modifiée qui comprennent :
- des polymères (P) à structure dendritique de surface initialement porteurs de groupements -OH et/ou -SH, de préférence porteurs au moins de groupements - OH ; et/ou
- des particules minérales présentant initialement en surface des fonctions - OH et/ou -SH, de préférence au moins des groupements -OH ;
lesdites espèces macromoléculaires de surface modifiée étant susceptibles d'être obtenues par le procédé consistant en une étape (e2) dans laquelle des espèces macromoléculaires (M) ayant des dimensions d'au moins 5 nm, initialement porteuses de fonctions -OH et/ou -SH, sont mises en contact avec :
- un catalyseur (C) porteur d'au moins une fonction guanidine conjuguée ;
- des espèces réactives (E), comportant des groupements réactifs incluant :
(i) au moins un groupe incluant un groupement carbonyle α-β insaturé C=C-C=O et/ou un groupement thiocarbonyle α-β insaturé C=C-C=S ; et/ou
(ii) au moins un groupe hétérocyclique comprenant de 3 à 5 chaînons choisi parmi les éthers cycliques, les thioéthers cycliques et les cycles aziridiniques ; et/ou
(iii) au moins un groupe choisi parmi les groupes isocyanate -N=C=O ou thioisocyanate -N=C=S, et les groupements trivalents de formule >C=CZ- , où Z est un groupe électroattracteur ; et le cas échéant
- un polymère (P) de structure dendritique obtenu par polymérisation de monomères de fonctionnalité supérieure à 2 catalysée par le catalyseur (C), ledit polymère (P) comportant :
▪ au moins deux fonctions OH et/ou SH et au moins une fonction réactive ; et/ou
▪ au moins deux fonctions réactives, et au moins une fonction OH et/ou SH ;
où lesdites fonctions réactives portées par les monomères sont choisies parmi les groupes incluant un groupement carbonyle α-β insaturé C=C-C=O et/ou un groupement thiocarbonyle α-β insaturé C=C-C=S , les groupes éther cycliques comprenant de 3 à 5 chaînons ou thioéther cycliques comprenant de 3 à 5 chaînons ou cycles aziridiniques comprenant de 3 à 5 chaînons ; les groupes isocyanate -N=C=O, les groupe thioisocyanate -N=C=S , les groupements trivalents de formule >C=CZ- où Z est groupe électroattracteur, et les fonctions esters, thioester, amide, carbamate, thiocarbamates, phosphate ou sulfate, ces fonctions réactives incluant de préférence un groupement carbonyle α-β insaturé C=C-C=O.

15. Utilisation d'espèces macromoléculaires de surface modifiée selon la revendication 14, à titre de charge ou d'agent actif dans une compositions de peinture, de vernis, d'encres ou d'adhésif : ou bien à titre de matière première pour la préparation d'espèces macromoléculaires de surface davantage modifiée.

## Patentansprüche

1. Verfahren zum Herstellen von makromolekularen Spezies mit modifizierter Oberfläche, aufweisend einen Schritt (e), in dem makromolekulare Spezies (M), die Größen von mindestens 5 nm aufweisen und die anfänglich -OH-Funktionen und/oder -SH-Funktionen tragen, in Kontakt gebracht werden mit:
- einem Katalysator (C), der mindestens eine konjugierte Guanidin-Funktion trägt, und
- reaktiven Spezies (E), aufweisend reaktive Gruppen, die umfassen:
(i) mindestens eine Gruppe aufweisend eine α-β-ungesättigte Carbonylgruppe C=C-C=0 und/oder eine α-β-ungesättigte Thiocarbonylgruppe C=C-C=S, und/oder
(ii) mindestens eine heterocyclische Gruppe aufweisend 3 bis 5 Ringglieder, ausgewählt aus cyclischen Ethern, cyclischen Thioethern und Aziridinringen, und/oder
(iii) mindestens eine Gruppe ausgewählt aus Isocyanatgruppen -N=C=O oder Thioisocyanat-Gruppen -N=C=S und dreiwertigen Gruppen der Formel >C=CZ-, wobei Z eine elektronenziehende Gruppe ist.

2. Verfahren gemäß Anspruch 1, wobei der Katalysator (C) eine konjugierte bis-Guanidin-Funktion aufweist und der folgenden Formel (I) entspricht: 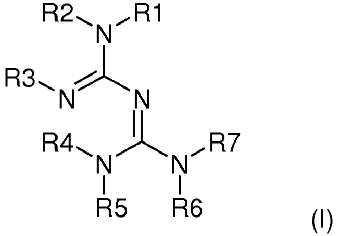 wobei jede der Gruppen R1 bis R7 unabhängig von den anderen Gruppen repräsentiert:
- ein Wasserstoffatom, oder
- eine Cyanogruppe -CN, oder
- eine Kohlenwasserstoffkette, die gesättigt oder ungesättigt, linear oder verzweigt, gegebenenfalls ganz oder teilweise cyclisiert, gegebenenfalls substituiert und gegebenenfalls unterbrochen ist durch ein oder mehrere Heteroatome und/oder Gruppen, die Heteroatome tragen, wobei diese Kohlenwasserstoffkette vorzugsweise eine Alkylgruppe mit 1 bis 4 Kohlenstoffatomen ist, ist.

3. Verfahren gemäß Anspruch 1, wobei der Katalysator (C) zwei untereinander konjugierte Guanidin-Funktionen trägt.

4. Verfahren gemäß einem der Ansprüche 1 bis 3, wobei die makromolekularen Spezies (M) Polymere mit dendritischer Struktur aufweisen, die anfänglich -OH-Gruppen und/oder -SH-Gruppen, vorzugsweise mindestens -OH-Gruppen, tragen.

5. Verfahren gemäß Anspruch 4, wobei die makromolekularen Spezies (M) Polymere mit dendritischer Struktur sind, die mittels Polymerisation von Monomeren mit einer Funktionalität größer als 2 in Gegenwart eines Katalysators (C), wie in einem der Ansprüche 1 bis 4 definiert, hergestellt sind, das Verfahren aufweisend die folgenden Schritte:
(e1) Bilden eines Polymers (P) mit dendritischer Struktur mittels Polymerisation, die mittels des Monomer-Katalysators (C) katalysiert wird, aufweisend:
- mindestens zwei OH-Funktionen und/oder SH-Funktionen und mindestens eine reaktive Funktion; und/oder
- mindestens zwei reaktive Funktionen und mindestens eine OH-Funktion und/oder SH-Funktion;
wobei die von den Monomeren getragenen reaktiven Funktionen ausgewählt sind aus den Gruppen aufweisend eine α-β-ungesättigte Carbonylgruppe C=C-C=0 und/oder eine α-β-ungesättigte Thiocarbonylgruppe C=C-C=S, cyclische Ethergruppen, die 3 bis 5 Ringglieder aufweisen, oder cyclische Thioether, die 3 bis 5 Ringglieder aufweisen, oder Aziridinringe, die 3 bis 5 Ringglieder aufweisen; Isocyanatgruppen -N=C=O, Thioisocyanat-Gruppen -N=C=S, dreiwertige Gruppen der Formel >C=CZ-, wobei Z eine elektronenziehende Gruppe ist, und die Funktionen Ester, Thioester, Amid, Carbamat, Thiocarbamate, Phosphat oder Sulfat, wobei diese reaktiven Funktionen vorzugsweise eine α-β-ungesättigte Carbonylgruppe C=C-C=0 einschließen. dann
(e2) in Kontakt Bringen des so erhaltenen Polymers P mit dendritischer Struktur, das Träger peripherer Funktionen -OH oder -SH ist, mit reaktiven Spezies (E) und dem Katalysator (C).

6. Verfahren gemäß einem der Ansprüche 1 bis 3, wobei die makromolekularen Spezies (M) Mineralpartikel, die anfänglich an der Oberfläche -OH-Gruppen oder -SH-Gruppen, vorzugsweise mindestens -OH-Gruppen aufweisen, aufweisen.

7. Verfahren nach einem der Ansprüche 1 bis 6, wobei in dem Schritt (e) des in Kontakt Bringens der makromolekularen Spezies (M), der reaktiven Spezies (E) und des Katalysators (C) das molare Verhältnis (Katalysator/reaktive Spezies) der Menge an Katalysator C bezogen auf die Gesamtmenge der reaktiven Gruppen, die auf den reaktiven Spezies (E) vorhanden sind, zwischen einschließlich 0,05 % und 10 % liegt.

8. Verfahren nach einem der Ansprüche 1 bis 7, wobei die reaktiven Spezies (E) Verbindungen sind, die mindestens eine α-β-ungesättigte Carbonylgruppe C=C-C=0 und/oder mindestens eine α-β-ungesättigte Thiocarbonylgruppe C=C-C=S, vorzugsweise Verbindungen, die der folgenden Formel (II) entsprechen: 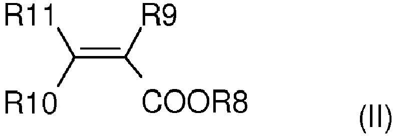 aufweisen,
wobei:
die Gruppe R8 eine lineare oder verzweigte Alkylgruppe, vorzugsweise eine Alkylgruppe, die 1 bis 12 Kohlenstoffatome aufweist, oder eine Kohlenwasserstoffkette ist, die gesättigt oder ungesättigt, linear oder verzweigt, gegebenenfalls ganz oder teilweise cyclisiert, gegebenenfalls substituiert und gegebenenfalls von einem oder mehreren Heteroatomen, ausgewählt aus N, O, S, P und Si, unterbrochen ist; und
die Gruppen R9, R10 und R11 jeweils unabhängig voneinander ein Wasserstoffatom, eine lineare oder verzweigte Alkylgruppe oder eine Kohlenwasserstoffkette, die gesättigt oder ungesättigt, linear oder verzweigt, gegebenenfalls ganz oder teilweise cyclisiert, gegebenenfalls substituiert und gegebenenfalls von einem oder mehreren Heteroatomen, ausgewählt aus N, O, S, P und Si, unterbrochen ist, repräsentieren.

9. Verfahren gemäß Anspruch 8, wobei
- der Schritt (e) vorzugsweise unter einem Druck von 7.10⁴ bis 10⁵ Pa, vorzugsweise bei einer Temperatur zwischen einschließlich 70 und 180°C durchgeführt wird;
und/oder
- der Schritt (e) mit einem molaren Verhältnis der Menge an reaktiven Gruppierungen, die auf den Spezies (E) vorhanden sind, bezogen auf die Menge an -OH-Gruppen und/oder -SH-Gruppen, die von den Spezies (M) getragen werden, von nicht mehr als 75%, vorzugsweise bei einer Temperatur zwischen einschließlich 70°C und 180°C durchgeführt wird,
wodurch die in dem Schritt (e) durchgeführte Funktionalisierung der Spezies (M) von einer Kopplung zwischen den Spezies (M) begleitet wird.

10. Verfahren gemäß Anspruch 8, wobei
- der Schritt (e) bei einem höheren Druck unter einem Druck von mehr als 2.10⁵ Pa, vorzugsweise bei einer Temperatur über 100°C durchgeführt wird;
und/oder
- der Schritt (e) mit einem molaren Verhältnis der Menge an auf den Spezies (E) vorhandenen reaktiven Gruppen bezogen auf die Menge der -OH-Gruppen und/oder -SH-Gruppen, die von den Spezies (M) getragen werden, von mindestens 100 % durchgeführt wird, vorzugsweise bei einer Temperatur von über 100°C,
wodurch die Funktionalisierung der Spezies (M) des Schrittes (e) im Wesentlichen ohne Auftreten von Kopplung zwischen den Spezies (M) abläuft.

11. Verfahren gemäß einem der Ansprüche 8 bis 10, wobei das in Kontakt Bringen der makromolekularen Spezies (M), der reaktiven Spezies (E) und des Katalysators (C) in Gegenwart eines anionischen Polymerisations-Cokatalysators durchgeführt wird, wodurch als Ergebnis des Schritts (e) die Bildung von endständigen Poly(meth)acrylatketten auf den Spezies (M) erzielt wird.

12. Verfahren gemäß einem der Ansprüche 1 bis 7, wobei die reaktiven Spezies (E) Verbindungen sind, die 3- bis 5-gliedrige heterocyclische Gruppen, ausgewählt aus cyclischen Ethern, cyclischen Thioethern und Aziridinringen, aufweisen, wobei diese reaktiven Spezies (E) Verbindungen, die eine Epoxy-Grupppe, Thioepoxy-Gruppe oder Aziridingruppe jeweils gemäß den Formeln: 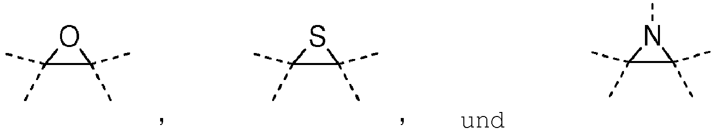 aufweisen, sind,
wodurch diese Gruppen mit den auf den Spezies (M) vorhandenen -OH-Gruppen und/oder -SH-Gruppen reagieren zum jeweiligen Durchführen des Bildens von Funktionen der Formeln: 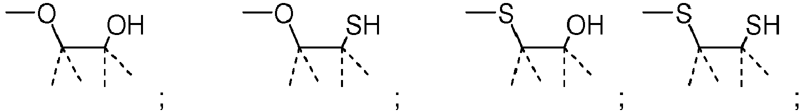 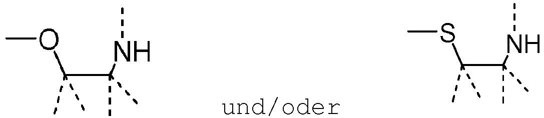 auf den genannten Spezies (M).

13. Verfahren gemäß einem der Ansprüche 1 bis 12, wobei die reaktiven Spezies (E) bifunktionelle Verbindungen, die mindestens zwei Gruppen ausgewählt aus den Gruppen, die mindestens eine α-β-ungesättigte Carbonylgruppe C=C-C=0 und/oder α-β-ungesättigte Thiocarbonylgruppe C=C-C=S aufweisen, den heterocyclischen Gruppen mit 3 bis 5 Ringgliedern, die aus cyclischen Ethern, cyclischen Thioethern oder Aziridinringen ausgewählt sind, den Isocyanat-Gruppen, den Thioisocyanat-Gruppen -N=C=S und den Gruppen der Formel >C=CZ-, wobei Z eine elektronenziehende Gruppe ist, aufweisen, wodurch eine Brückenbildung der Spezies (M) erzielt wird.

14. Makromolekulare Spezies mit modifizierter Oberfläche, aufweisend:
- Polymere (P) mit dendritischer Struktur, deren Oberfläche anfänglich -OH-Gruppen und/oder -SH-Gruppen, vorzugsweise mindestens -OH-Gruppen trägt; und/oder
- Mineralpartikel, die anfänglich auf der Oberfläche -OH-Funktionen und/oder -SH-Funktionen, vorzugsweise mindestens -OH-Gruppen aufweisen;
wobei die makromolekularen Spezies mit modifizierter Oberfläche geeignet sind, mittels des Verfahrens erzielt zu werden, das aus einem Schritt (e2) besteht, in dem makromolekulare Spezies (M), die Größen von mindestens 5 nm aufweisen und die anfänglich -OH-Funktionen und/oder -SH-Funktionen aufweisen, in Kontakt gebracht werden mit:
- einem Katalysator (C), der mindestens eine konjugierte Guanidin-Funktion trägt;
- reaktiven Spezies (E), die reaktive Gruppen aufweisen, die umfassen:
(i) mindestens eine Gruppe, die eine α-β-ungesättigte Carbonylgruppe C=C-C=0 und/oder eine α-β-ungesättigte Thiocarbonylgruppe C=C-C=S einschließt; und/oder
(ii) mindestens eine heterocyclische Gruppe, die 3 bis 5 Ringglieder aufweist und die ausgewählt ist aus cyclischen Ethern, cyclischen Thioethern und Aziridinringen; und/oder
(iii) mindestens eine Gruppe ausgewählt aus Isocyanatgruppen -N=C=O oder Thioisocyanat-Gruppen -N=C=S und dreiwertigen Gruppen der Formel >C=CZ-, wobei Z eine elektronenziehende Gruppe ist; und gegebenenfalls
- ein Polymer (P) mit dendritischer Struktur, das mittels Polymerisation von Monomeren mit einer Funktionalität größer als 2, die mittels des Katalysators (C) katalysiert wird, erlangt wird, wobei das Polymer (P) aufweist:
▪ mindestens zwei OH-Funktionen und/oder SH-Funktionen und mindestens eine reaktive Funktion; und/oder
▪ mindestens zwei reaktive Funktionen und mindestens eine Funktion OH und/oder SH;
wobei die genannten, von den Monomeren getragenen reaktiven Funktionen ausgewählt sind aus Gruppen aufweisend eine α-β-ungesättigte Carbonylgruppe C=C-C=0 und/oder eine α-β-ungesättigte Thiocarbonylgruppe C=C-C=S, cyclischen Ethergruppen, die 3 bis 5 Ringglieder aufweisen, oder cyclischen Thioethern, die 3 bis 5 Ringglieder aufweisen, oder Aziridinringen, die 3 bis 5 Ringglieder aufweisen; Isocyanatgruppen -N=C=O, Thioisocyanat-Gruppen -N=C=S, dreiwertigen Gruppen der Formel >C=CZ-, wobei Z eine elektronenziehende Gruppe ist, und den Funktionen Ester, Thioester, Amid, Carbamat, Thiocarbamate, Phosphat oder Sulfat, wobei diese reaktiven Funktionen vorzugsweise eine α-β-ungesättigte Carbonylgruppe C=C-C=0 aufweisen.

15. Verwendung makromolekularer Spezies mit modifizierten Oberflächen gemäß Anspruch 14, als Füllstoff oder Wirkstoff in einer Zusammensetzung von Farben, Lacken, Tinten oder Klebstoffen: oder als Rohstoff für das Herstellen von makromolekularen Spezies mit stärker modifizierter Oberfläche.

## Claims

1. A method for preparing macromolecular species with a modified surface, comprising a step (e) in which macromolecular species (M), having dimensions of at least 5 nm, initially carrying -OH and/or - SH functions, are brought into contact with:
- a catalyst (C) carrying at least one conjugated guanidine function; and
- reactive species (E), comprising reactive groups including:
(i) at least one group including an α,β-unsaturated carbonyl group C=C-C=O and/or an α,β-unsaturated thiocarbonyl group C=C-C=S; and/or
(ii) at least one heterocyclic group comprising from 3 to 5 ring members selected from cyclic ethers, cyclic thioethers and aziridine rings; and/or
(iii) at least one group selected from isocyanate -N=C=O or thioisocyanate -N=C=S groups, and trivalent groups of formula >C=CZ-, where Z is an electron withdrawing group.

2. The method as claimed in claim 1, in which the catalyst (C) comprises a conjugated bis-guanidine function and corresponds to the following formula (I): 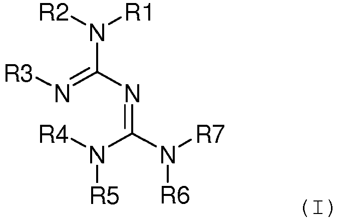 where each of the R1 to R7 groups is, independently of the other groups:
- a hydrogen atom; or
- a cyano group -CN; or
- a linear or branched, saturated or unsaturated, hydrocarbon chain which is optionally completely or partially cyclized, optionally substituted and optionally interrupted with one or more heteroatoms and/or groups carrying heteroatoms, this hydrocarbon chain preferably being an alkyl group comprising from 1 to 4 carbon atoms.

3. The method according to claim 1, in which the catalyst (C) carries two guanidine functions conjugated to one another.

4. The method according to anyone of claims 1 to 3, in which the macromolecular species (M) comprise polymers with a dendritic structure which initially carry -OH and/or -SH groups, preferably carry at least -OH groups.

5. The method according to claim 4, in which the macromolecular species (M) are polymers with a dendritic structure which are obtained by polymerization of monomers which have a functionality of greater than 2, in the presence of a catalyst (C) as defined in anyone of claims 1 to 4, the method comprising the following steps:
(e1) a polymer (P) with a dendritic structure is formed by polymerization, catalyzed by the catalyst (C) of monomers comprising:
- at least two OH and/or SH functions and at least one reactive function; and/or
- at least two reactive functions and at least one OH and/or SH function;
where said reactive functions carried by the monomers are selected from the groups including an α,β-unsaturated carbonyl group C=C-C=O and/or an α, β-unsaturated thiocarbonyl group C=C-C=S, cyclic ether groups comprising from 3 to 5 ring members or cyclic thioether groups comprising from 3 to 5 ring members or aziridine rings comprising from 3 to 5 ring members; isocyanate groups -N=C=O, thioisocyanate groups - N=C=S, trivalent groups of formula >C=CZ-, where Z is an electron-withdrawing group, and ester, thioester, amide, carbamate, thiocarbamate, phosphate or sulfate functions, these reactive functions preferably including an α,β-unsaturated carbonyl group C=C-C=O;
then
(e2) the resulting polymer (P) with a dendritic structure, which carries peripheral -OH or -SH functions, is brought into contact with reactive species (E) and the catalyst (C).

6. The method according to anyone of claims 1 to 3, in which the macromolecular species (M) comprise mineral particles initially having, at the surface, -OH or -SH groups, preferably at least -OH groups.

7. The method according to anyone of claims 1 to 6, in which, in step (e) of bringing the macromolecular species (M), the reactive species (E) and the catalyst (C) into contact, the molar ratio (catalyst/reactive species) of the amount of catalyst C relative to the total amount of reactive groups present on the reactive species (E) is between 0.05% and 10%.

8. The method according to any one of claims 1 to 7, in which the reactive species (E) are compounds comprising at least one α,β-unsaturated carbonyl group C=C-C=O and/or at least one α,β-unsaturated thiocarbonyl group C=C-C=S, preferably compounds corresponding to the following formula (II): 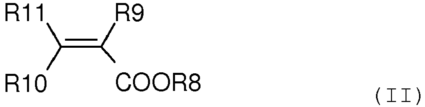 where:
- the R8 group is a linear or branched alkyl group, preferably an alkyl group comprising from 1 to 12 carbon atoms; or a linear or branched, saturated or unsaturated, hydrocarbon chain which is optionally completely or partially cyclized, optionally substituted and optionally interrupted with one or more heteroatoms selected from N, O, S, P and Si; and
- the R9, R10 and R11 groups are each, independently, a hydrogen atom, a linear or branched alkyl group, or a linear or branched, saturated or unsaturated, hydrocarbon chain which is optionally completely or partially cyclized, optionally substituted and optionally interrupted with one or more heteroatoms selected from N, O, S, P and Si.

9. The method according to claim 8, in which:
- step (e) is carried out at a pressure of from 7 × 10⁴ to 10⁵ Pa, preferably at a temperature of between 70 and 180°C; and/or
- step (e) is carried out with a molar ratio of the amount of reactive groups present on the species (E) relative to the amount of -OH and/or -SH groups carried by the species (M) of at most 75%, preferably at a temperature of between 70°C and 180°C, by virtue of which the functionalization of the species (M) carried out in step (e) is accompanied by coupling between the species (M).

10. The method according to claim 8, in which:
- step (e) is carried out at a pressure of greater than 2 × 10⁵ Pa, preferably at a temperature above 100°C;
and/or
- step (e) is carried out with a molar ratio of the amount of reactive groups present on the species (E) relative to the amount of -OH and/or -SH groups carried by the species (M) of greater than at least 100%, preferably at a temperature above 100°C,
by virtue of which the functionalization of the species (M) of step (e) occurs essentially without any coupling phenomenon between the species (M).

11. The method according to one of claims 8 to 10, in which the macromolecular species (M), the reactive species (E) and the catalyst (C) are brought into contact in the presence of an anionic polymerization cocatalyst, by virtue of which the formation of poly(meth)acrylate end chains on the species (M) is obtained at the end of step (e).

12. The method according to anyone of claims 7 to 7, in which the reactive species (E) are compounds comprising heterocyclic groups comprising from 3 to 5 ring members, said groups being selected from cyclic ethers, cyclic thioethers and aziridine rings, these reactive species (E) being compounds comprising an epoxy, thioepoxy or aziridine group, having, respectively, the formulae: 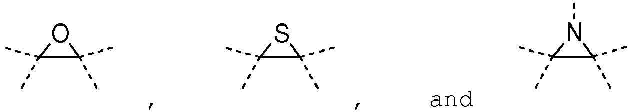 by virtue of which these groups react with the -OH and/or -SH groups present on the species (M) so as to result, respectively, in the formation, on said species (M), of functions having the formulae:

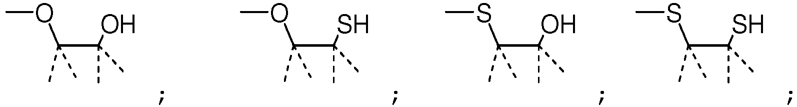

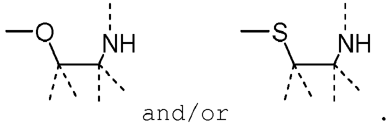

13. The method according to anyone of claims 1 to 12, in which the reactive species (E) comprise difunctional compounds comprising at least two groups selected from groups comprising at least one α,β-unsaturated carbonyl C=C-C=O and/or α,β-unsaturated thiocarbonyl C=C-C=S group, heterocyclic groups comprising from 3 to 5 ring members, said groups being selected from cyclic ethers, cyclic thioethers or aziridine rings, isocyanate groups, thioisocyanate groups -N=C=S, and groups of formula >C=CZ-, where Z is an electron-withdrawing group, by virtue of which bridging of the species (M) is obtained.

14. Macromolecular species with a modified surface comprising:
- polymer (P) with surface dendritic structure carrying initially groups -OH and/or -SH, preferably carrying at least -OH groups; and/or
- mineral particles initially presenting on their surface -OH and/or -SH functions, preferably at least -OH groups;
said macromolecular species with a modified surface being susceptible to be obtained by a process consisting of a step (e2) in which macromolecular species (M) having dimensions of at least 5 nm, initially carrying -OH and/or -SH functions, are brought into contact with:
- a catalyst (C) carrying at least one conjugated guanidine function; and
- reactive species (E), comprising reactive groups including:
(i) at least one group including an α,β-unsaturated carbonyl group C=C-C=O and/or an α,β-unsaturated thiocarbonyl group C=C-C=S; and/or
(ii) at least one heterocyclic group comprising from 3 to 5 ring members selected from cyclic ethers, cyclic thioethers and aziridine rings; and/or
(iii) at least one group selected from isocyanate -N=C=O or thioisocyanate -N=C=S groups, and trivalent groups of formula >C=CZ-, where Z is an electron withdrawing group; and where appropriate
- a polymer (P) of dendritic structure which are obtained by polymerization of monomers which have a functionality of greater than 2 catalyzed by catalyst (C), said polymer (P) comprising:
• at least two functions OH and/or SH and at least a reactive function; and/or
• at least two reactive functions, and at least one OH and/or SH function;
where said reactive functions carried by the monomers are chosen among groups including an α,β-unsaturated carbonyl group C=C-C=O and/or an α,β-unsaturated thiocarbonyl group C=C-C=S, cyclic ether groups comprising from 3 to 5 ring members or cyclic thioether groups comprising from 3 to 5 ring members or aziridine rings comprising from 3 to 5 ring members; isocyanate groups -N=C=O, thioisocyanate groups -N=C=S, trivalent groups of formula >C=CZ-, where Z is an electron-withdrawing group, and ester, thioester, amide, carbamate, thiocarbamate, phosphate or sulfate functions, these reactive functions preferably including an α,β-unsaturated carbonyl group C=C-C=O.

15. Use of macromolecular species with a modified surface according to claim 14, as a filler or an active agent in a paint, varnish, ink or adhesive composition, or else as a starting material for the preparation of macromolecular species with an even further modified surface.
